# EUROPÄISCHE PATENTANMELDUNG

(11) **EP 4 726 241 A1**
(43) Veröffentlichungstag der Anmeldung: **15.04.2026**
(21) Anmeldenummer: 25207988.4
(22) Anmeldetag: 10.10.2025
(51) Int. Cl.: F16L 5/02, F16L 5/10, H01B 17/58, H02G 3/22, F16L 5/14, F24F 1/32

(54) **VERWENDUNG EINER LEITUNGSDURCHFÜHRUNG**

(30) Priorität: 10.10.2024 DE 102024129298; 10.10.2024 DE 102024129304
(71) Anmelder: Hauff-Technik GmbH & Co. KG, 89568 Hermaringen (DE)
(72) Erfinder: HUG, Christian, 89522 Heidenheim (DE); BURKHARDT, Andreas, 89522 Heidenheim (DE); FANDINO, Daniel, 89073 Ulm (DE)
(74) Vertreter: Szynka Smorodin Patentanwälte Partnerschaft mbB

(57) **Zusammenfassung**

Die vorliegende Erfindung betrifft eine Verwendung einer Leitungsdurchführung (1), welche eine Durchführungshülse (2) und eine Manschette (3) aus einem Elastomermaterial aufweist, wobei
- die Leitungsdurchführung (1) solchermaßen in eine Durchlassöffnung (1001) eingesetzt wird, dass die Manschette (3) in einer Montageposition axial außerhalb der Durchlassöffnung (1001) angeordnet ist, und
- die Durchführungshülse (2) in dieser Montageposition befestigt wird, indem in einen Ringraum (10) zwischen Durchführungshülse (2) und Laibung (1002) der Durchlassöffnung (1001) eine zunächst fließfähige Füllsubstanz (70) eingebracht wird, die dann expandiert und in der Durchlassöffnung (1001) härtet, und
- sich die Manschette (3) nach radial innen zu einer durch die Durchführungshülse (2) gelegten Leitung (200) hin anlegt.

## Beschreibung

Die vorliegende Erfindung betrifft die Verwendung einer Leitungsdurchführung zum Einbau in ein Wand- oder Bodenelement eines Gebäudes.

Im Zuge der Verwendung wird die Leitungsdurchführung in eine Durchlassöffnung eingesetzt und darin befestigt. Bei der Durchlassöffnung kann es sich insbesondere um eine Bohrung handeln, etwa um eine sogenannte Kernbohrung. Diese kann nachträglich in ein bereits bestehendes Wand- oder Bodenelement eingebracht werden, bspw. im Zuge eines nachträglichen Anschlusses des Gebäudes an ein Leitungsnetz oder beim Anschluss einer Versorgungseinheit an das Gebäude.

Der vorliegenden Erfindung liegt das technische Problem zugrunde, eine vorteilhafte Verwendung bzw. Leitungsdurchführung als Gegenstand der Verwendung anzugeben.

Dies wird mit der Leitungsdurchführung und deren Verwendung gemäß Anspruch 1 gelöst. Die Leitungsdurchführung weist eine Durchführungshülse und eine Manschette auf, wobei die Leitungsdurchführung bzw. Durchführungshülse solchermaßen in die Durchlassöffnung gesetzt wird, dass die Manschette axial hervorsteht. In dieser Position ("Montageposition") wird die Durchführungshülse und damit die Leitungsdurchführung befestigt, indem in einen Ringraum zwischen Durchführungshülse und Laibung der Durchlassöffnung eine Füllsubstanz eingebracht wird. Diese ist zunächst fließfähig, expandiert dann und härtet hierbei.

In anderen Worten wird damit die Manschette, die aus Elastomermaterial vorgesehen ist, durch Einschäumen in der Durchlassöffnung befestigt. Mit der Manschette kann bspw. zu einer vor oder nach dem Einschäumen der Durchführungshülse hindurchgeführten Leitung gedichtet werden. Die Manschette legt sich also dichtend zu einer durch die Durchführungshülse verlegten Leitung hin an, etwa an die Leitung selbst oder an ein zusätzliches Element (z.B. Abschlussstück). Sie kann bspw. mit einer Spannschelle dichtend nach innen angedrückt werden. Hierbei kann durch das Einschäumen eine Befestigung bzw. Abdichtung zur Laibung hin erreicht werden, und zwar auch bei unterschiedlicher Beschaffenheit des Wand- oder Bodenelements (Ton, Stein bzw. Ziegel etc.). Die Manschette, mit der die Abdichtung nach radial innen realisiert wird, kann hingegen eine Flexibilität eröffnen, bspw. hinsichtlich eines Austauschs der Leitung oder einer Abdichtung zu unterschiedlichen Leitungstypen. Wie nachstehend im Detail diskutiert, kann die Manschette entweder gegen die Leitung selbst oder gegen ein zur weiteren Montage/Befestigung der Leitung genutztes Abschlussstück gedrückt werden, lassen sich also abhängig vom Leitungstyp mit der gleichen eingeschäumten Leitungsdurchführung unterschiedliche Leitungen montieren.

Die Durchlassöffnung und Leitungsdurchführung können bevorzugt zum Anbinden einer außerhalb des Gebäudes angeordneten Wärmepumpe (z. B. Luft-Wasser-Wärmepumpe) oder Wärmetauscherstruktur (z. B. Erdwärmesonde bzw. Erdkollektor) dienen. Es können also mindestens zwei Fluidleitungen hindurch verlegt werden, bspw. für Vor- und Rücklauf, sowie optional zusätzlich eine Elektroleitung (und gegebenenfalls weitere Leitungen, z. B. für Daten etc.). Dabei können solche Einzel-Leitungen einerseits in Form eines Monoblockrohres vorgesehen sein, können sie also in einem gemeinsamen Schutzrohr zusammengefasst sein (wobei dessen verbleibender Innenraum ausisoliert sein kann, bspw. ausgeschäumt).

Die vorliegende Leitungsdurchführung lässt sich zum Hindurchführen eines solchen Monoblockrohres nutzen, die Manschette kann also gegen die Außenwandfläche des Schutzrohres dichten. Bei alternativen Bauformen bzw. Verlegetechniken werden hingegen die Leitungen einzeln durch die Leitungsdurchführung geführt, wobei die Manschette in diesem Fall zur Aufnahme eines Abschlussstücks genutzt werden kann. Durch dieses kann bzw. können die Leitungen hindurch verlegt werden bzw. verlaufen, wobei sich ein von dem Abschlussstück begrenzter Innenraum zusätzlich ausschäumen lässt, siehe unten im Detail. Ferner ist eine Leitungsverlegung dahingehend möglich, dass die Manschette gegen die Isolierung einer Leitung bzw. eines Rohres dichtet, wobei das (abisolierte) Rohr in die Durchführungshülse weiterläuft, die Isolierung hingegen in der Manschette endet.

Zusammengefasst kann es unterschiedliche Verlegearten geben, wobei mit der vorliegenden Leitungsdurchführung sowohl ein Monoblockrohr als auch Einzel-Leitungen montiert werden können. Dabei schafft die Leitungsdurchführung eine definierte Schnittstelle zum Wand- bzw. Bodenelement, wobei die Leitung bzw. Leitungen beim Einschäumen der Durchführungshülse bereits in der Leitungsdurchführung angeordnet sein oder auch nachträglich hindurchgeführt werden können.

Bevorzugte Ausgestaltungen finden sich in den abhängigen Ansprüchen und der gesamten Offenbarung, die sich stets sowohl auf Verwendungs- als auch Verfahrens- und Vorrichtungsaspekte bezieht; jedenfalls implizit ist die Offenbarung hinsichtlich sämtlicher Anspruchskategorien zu lesen.

Die Manschette ist aus Elastomermaterial vorgesehen, wobei "Elastomermaterial" im Rahmen dieser Offenbarung ganz allgemein einen Kunststoff mit elastischem Verhalten meint. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Um die Mittenachse der Durchführungshülse kann diese bspw. dreh- oder bevorzugt rotationssymmetrisch sein. In der Montageposition kann die Mittenachse der Durchführungshülse bspw. mit einer Längsachse der Durchlassöffnung zusammenfallen, um welche Längsachse z. B. die Laibung der Durchlassöffnung dreh- oder bevorzugt rotationssymmetrisch ist. Angaben wie "axial", "radial" und "umlaufend", sowie die zugehörigen Richtungen ("Axialrichtung" etc.), beziehen sich ohne gegenteilige Angabe auf die Mittenachse der Durchführungshülse, insbesondere deren in der Durchlassöffnung angeordneten Abschnitt. "Innen" und "außen" beziehen sich ohne ausdrücklich gegenteilige Angabe auf die Radialrichtung, eine Innen- oder Innenwandfläche ist also bspw. der Mittenachse der Durchführungshülse und/oder Längsachse der Durchlassöffnung zugewandt, eine Außen- oder Außenwandfläche hingegen abgewandt.

Die Füllsubstanz ist bevorzugt solchermaßen vorgesehen, dass sie nach dem Einbringen expandiert, also an Volumen zunimmt. Beim Einbringen ist sie noch fließfähig, die Fließfähigkeit nimmt nach dem Einbringen im Zuge des Härtens ab (die Viskosität nimmt also zu). Als Füllsubstanz wird bevorzugt ein Harz vorgesehen, bspw. ein 2K-Expansionsharz, z. B. auf Polyurethan-Basis.

Gemäß einer bevorzugten Ausführungsform ist zumindest eine Innenwandfläche der Manschette in einem Längsschnitt betrachtet mit mehreren Erhebungen vorgesehen, die nach radial innen hervortreten und axial aufeinanderfolgend angeordnet sind (der Längsschnitt kann eine Mittenachse der Manschette beinhalten, diese kann z. B. mit der Mittenachse der Durchführungshülse zusammenfallen). Bevorzugt können die Erhebungen jeweils umlaufend in sich geschlossen sein. Mit einer entsprechend gestalteten Manschette kann sich bspw. eine gute Abdichtung zu einer Leitung mit gewellter Außenwandfläche erreichen lassen, bspw. zu einem Wellrohr bzw. Verbundwellrohr hin. Dabei können die Erhebungen, jedenfalls im angedrückten Zustand der Manschette, auch eine Axialfixierung und damit Auszugssicherung schaffen.

Ein Axialabstand von zwei nächstbenachbarten Erhebungen kann bspw. bei 0,5 cm, 0,8 cm bzw. 1 cm liegen, mit möglichen Obergrenzen bei z. B. höchstens 5 cm, 4 cm bzw. 3 cm. Insgesamt kann die Manschette bspw. mindestens 2, 3 oder 4 Erhebungen aufweisen, was einen guten Halt und eine Abdichtung schaffen kann; mögliche Obergrenzen können bei höchstens 15 bzw. 10 Erhebungen liegen, was bspw. hinsichtlich des Durchführens der Leitung von Vorteil sein kann.

Im Allgemeinen kann allein die Innenwandfläche der Manschette entsprechend strukturiert und kann dabei die radial entgegengesetzte Außenwandfläche im Axialschnitt betrachtet glatt ausgebildet sein, also einen geradlinigen Verlauf haben. Bevorzugt ist jedoch die Außenwandfläche der Innenwandfläche entsprechend mit Erhebungen geformt (die jeweils nach radial außen hervortreten), jedenfalls in einem Axialabschnitt. In anderen Worten hat also eine Mantelwand der Manschette, jedenfalls in einem Axialabschnitt, im Längsschnitt betrachtet einen gewellten Verlauf. Dies kann etwas Flexibilität schaffen und speziell mit Blick auf große und damit vglw. starre Leitungen/Rohre von Vorteil sein.

Besonders bevorzugt kann eine Ausgestaltung dahingehend sein, dass die Außenwandfläche zumindest in einem Axialabschnitt, in dem ein Spannmittel (z. B. Spannschelle) aufgesetzt ist oder wird, im Längsschnitt betrachtet glatt ausgebildet ist. Weiter bevorzugt kann die Außenwandfläche der Manschette dabei in einem anderen Axialabschnitt gewellt sein, siehe vorne.

Gemäß einer bevorzugten Ausführungsform ist eine Außenwandfläche der Leitung im Längsschnitt betrachtet mit axial aufeinanderfolgenden Erhebungen und Vertiefungen geformt. Im Allgemeinen kann die Außenwandfläche bzw. Leitung dabei auch als Spiralrohr ausgebildet sein, kann also bei Betrachtung der Außenwandfläche insgesamt eine spiralförmig umlaufende Erhebung vorliegen. Bevorzugt ist die Außenwandfläche bzw. Leitung als Wellrohr ausgebildet und sind die axial aufeinanderfolgenden Erhebungen und Vertiefungen jeweils in sich geschlossen. Dies kann mit einer vorstehend geschilderten Manschette kombiniert werden, wobei im verlegten Zustand die an der Innenwandfläche der Manschette ausgebildeten Erhebungen jeweils in einer Vertiefung der Außenwandfläche zu liegen kommen.

Eine gewellte Außenwandfläche kann hierbei sowohl bei einem Monoblockrohr als auch bei einem als Leitung vorgesehenen Schutzrohr vorgesehen sein, durch welches Einzel-Leitungen verlegt werden. Die Kombination mit der in die Durchlassöffnung eingeschäumten Durchführungshülse kann bspw. dahingehend von Vorteil sein, dass die Durchführungshülse zusätzlich zur Befestigung der Manschette eine definierte Innenwandfläche schafft. Dies kann das Hindurchführen der gewellten Außenwandfläche vereinfachen (weniger verheddern), bspw. bei einer Erstverlegung oder auch späteren Revision.

In bevorzugter Ausgestaltung ist die Durchführungshülse aus einem im Vergleich zum Elastomermaterial härteren Durchführungshülsenmaterial vorgesehen. Das härtere Material kann bspw. hinsichtlich der Leitungsverlegung von Vorteil sein, bspw. eine geringere Haftreibung als das Elastomermaterial haben. Im Allgemeinen kann die Durchführungshülse auch aus Metall vorgesehen sein, bevorzugt ist das Durchführungshülsenmaterial jedoch ein Hartkunststoff. Die Durchführungshülse kann bspw. eine größere Shore-Härte als das Elastomermaterial haben.

Generell kann ein "Hartkunststoff" bspw. eine Shore-Härte (D) von mindestens 40 Shore, weiter und besonders bevorzugt mindestens 45 Shore bzw. mindestens 50 Shore haben; mögliche Obergrenzen können bspw. bei höchstens 100 Shore, weiter und besonders bevorzugt höchstens 90 Shore bzw. höchstens 80 Shore liegen (jeweils D).

Die aus einem härteren Durchführungshülsenmaterial vorgesehene Durchführungshülse und die Manschette können hierbei dennoch einstückig miteinander ausgebildet sein, also nicht zerstörungsfrei auftrennbar. So ist bspw. eine Herstellung als Mehrkomponenten-Spritzgussteil möglich, z. B. kann die Manschette als Weichkomponente an die Durchführungshülse als Hartkomponente angespritzt sein. Alternativ können die beiden als zuvor gesondert hergestellte Teile zusammengesetzt und miteinander verbunden sein, bspw. stoffschlüssig (z. B. durch Verkleben oder Aufvulkanisieren oder Reibschweißen).

Gemäß einer bevorzugten Ausführungsform hat die Leitung einen Außendurchmesser von mindestens 8 cm, weiter bevorzugt mindestens 9 cm bzw. mindestens 10 cm. In anderen Worten ist die Leitung, etwa im Vergleich zu einem Leerrohr für Datenkabel, mit einem vglw. großen Durchmesser vorgesehen. Mit der Manschette kann hierbei gleichwohl eine definierte und auch kontrollierbare Abdichtung zur Leitung hin geschaffen werden (bei letzterer kann es sich hierbei bspw. um ein Monoblockrohr oder ein Schutzrohr handeln, siehe vorne). Speziell aufgrund des großen Durchmessers und damit Umfangs kann die Verlagerung der Dichtfläche aus der Durchlassöffnung heraus von Vorteil sein, weil damit eine Zugänglichkeit geschaffen und auch Sichtkontrolle möglich sein kann. Ein Vorteil der Durchführungshülse wiederum kann, insbesondere wenn diese aus einem härteren Material vorgesehen ist (siehe vorne), darin liegen, dass bei den großen Durchmessern und damit großen Flächen die Reibung besonders relevant sein kann.

Mögliche Obergrenzen des Außendurchmessers der Leitung können bspw. bei höchstens 25 cm, 20 cm bzw. 15 cm liegen. Im Falle einer Außenwandfläche mit Erhebungen und Vertiefungen wird deren maximaler Durchmesser betrachtet, wird der Durchmesser also an den Erhebungen genommen. Im Allgemeinen muss die Bezugnahme auf einen Durchmesser keine Kreisform implizieren, sondern ist der Begriff auf einen Mittelwert aus kleinster und größter Erstreckung zu lesen (in einem achssenkrechten Schnitt); im bevorzugten Fall des kreisförmigen Querschnitts entspricht dies dem Kreisdurchmesser.

Die Durchführungshülse kann bevorzugt einen Innendurchmesser von mindestens 10 cm haben, wobei weitere Untergrenzen bei mindestens 12 cm, 14 cm bzw. 15 cm liegen können (und mögliche Obergrenzen bei z. B. höchstens 30 cm bzw. 25 cm).

In bevorzugter Ausgestaltung ist die Leitung ein Monoblockrohr, siehe vorne. Hierbei kann es sich um ein Schutzrohr handeln, in dem mehrere Einzel-Leitungen verlaufen, wobei ein verbleibender Innenraum des Schutzrohres mit einer Isolierung gefüllt sein kann, insbesondere vollständig ausgefüllt. Die Isolierung kann bspw. in Form eines geschäumten Materials vorgesehen sein. Im Falle des Monoblockrohrs können die Einzel-Leitungen und die Isolierung bereits in dem Schutzrohr angeordnet sein, wenn dieses durch die Durchlassöffnung hindurchgeführt und/oder durch die Leitungsdurchführung geschoben wird.

Gemäß einer bevorzugten Ausführungsform weist die Leitung eine Innen-Leitung und einen Mantel auf. Im Allgemeinen kann es sich bei der Innen-Leitung um ein Kabel handeln, welches in einem Schutzrohr als Mantel verläuft. Bevorzugt handelt es sich bei der Innen-Leitung jedoch um ein Rohr, insbesondere um eine Fluidleitung, und/oder bei dem Mantel um eine Isolierung, besonders bevorzugt ist also ein isoliertes Rohr. Dieses kann bspw. als Vor- oder Rücklauf dienen. Im Allgemeinen können Mantel und Innen-Leitung auch Teil eines Monoblockrohres sein, können in dem Mantel also auch mehrere Innen-Leitungen zusammengefasst sein. Bevorzugt beinhaltet der Mantel jedoch genau eine Innen-Leitung.

Die Verlegung bzw. Montage erfolgt bevorzugt derart, dass sich der Mantel samt Innen-Leitung in die Manschette hineinerstreckt. Die Manschette kann sich hierbei an den Mantel anlegen, sie kann z. B. mit einem Spannelement nach radial innen an den Mantel angedrückt werden. Bevorzugt endet der Mantel in der Manschette, wohingegen die Innen-Leitung axial weiter in die Durchführungshülse hinein verläuft. Zusammengefasst kann die Manschette einer Anbindung des Mantels dienen, wobei axial anschließend die Innen-Leitung ohne Mantel in die Durchführungshülse weiterläuft. Die Manschette kann also insbesondere der Anbindung der Isolierung dienen, wobei das abisolierte Rohr in die Durchführungshülse weiterläuft. Die Manschette kann bspw. eine Abdichtung dahingehend schaffen, dass ein Eindringen von Feuchtigkeit bzw. Verschmutzung, etwa in die Isolierung an deren offenen axialem Ende, erschwert bzw. verhindert wird.

Zu der Innen-Leitung hin gibt es bevorzugt ebenfalls eine Abdichtung. In bevorzugter Ausgestaltung ist hierfür an einem Elastomerteil der Leitungsdurchführung ein nach innen hervortretender Vorsprung vorgesehen, der sich zu der Innen-Leitung hin anlegt. Das Elastomerteil kann auch die Manschette bilden, diese kann also monolithisch mit dem Vorsprung sein. Der Vorsprung ist bevorzugt umlaufend in sich geschlossen, wobei axial aufeinanderfolgend auch eine Mehrzahl Vorsprünge vorgesehen sein können. Mit dem Hindurchführen der Innen-Leitung legt sich der Vorsprung bevorzugt an deren Außenwand an. Die Innen-Leitung kann als Wellrohr vorgesehen sein, etwa als Metall- bzw. Edelstahl-Wellrohr im Falle der Fluidleitung.

Im montierten Zustand kann der Vorsprung in einer Vertiefung zwischen zwei Erhebungen in der Außenwandfläche liegen, also zwischen zwei Wellenbergen des Wellrohres. Dies kann bspw. eine gewisse Axialfixierung und damit Auszugssicherung schaffen.

In bevorzugter Ausgestaltung wird die Manschette mit einem aufgesetzten Spannelement nach radial innen angedrückt. Das Spannelement sitzt also auf der Außenwandfläche der Manschette und drückt deren Innenwandfläche an, bspw. an die Außenwandfläche der Leitung oder an ein Abschlussstück (siehe unten im Detail). Das Spannelement kann die Manschette hierbei ringförmig umschließen, wobei das Andrücken über eine Durchmesserverringerung des Spannelements realisiert wird. Dieses kann bspw. als Spannring oder Spannschelle, im Allgemeinen aber z. B. auch als Kabelbinder vorgesehen sein.

Gemäß einer bevorzugten Ausführungsform weist die Leitungsdurchführung eine weitere Manschette auf, die einen größeren Durchmesser hat und die Manschette umschließt. In anderen Worten ist die (erste) Manschette innerhalb der weiteren Manschette angeordnet. Letztere kann bspw. einen Innendurchmesser von mindestens 10 cm, 12 cm bzw. 14 cm haben (mit möglichen Obergrenzen bei z. B. höchstens 30 cm bzw. 25 cm). Zusätzlich zu der ersten Manschette kann die weitere Manschette auch eine zweite Manschette umschließen, wobei die erste und zweite Manschette bspw. für Vor- und Rücklauf vorgesehen sein können.

Die weitere Manschette kann z. B. der Montage eines Schutzrohres oder einer Verblendung dienen. Eine solche Verblendung kann z. B. als geteiltes Rohrstück vorgesehen sein, welches nachträglich auf die bereits verlegte(n) Leitung(en) gesetzt und in die weitere Manschette eingeschoben werden kann. In dem Schutzrohr bzw. der Verblendung können die Leitungen zusammengefasst und in zumindest gewissem Umfang vor einer Beschädigung geschützt sein. Die Verblendung kann bspw. auch eine Dämmfunktion haben, also die darin geführten Leitungen dämmen. Bevorzugt kann die Verblendung hierfür ein anteilig ausisoliertes Innenvolumen haben, bspw. geschützt von einer Hartschale (aus Metall oder Hartkunststoff). Dies kann auch speziell im Falle einer oberirdischen Montage gelten, wenn also die Leitungsdurchführung oberhalb des Bodens in einer Wand montiert ist.

Gemäß einer bevorzugten Ausführungsform wird die Füllsubstanz durch einen Injektionskanal eingebracht, welcher einen Abzweig aufweist. Der Injektionskanal kann in die Leitungsdurchführung integriert sein, bevorzugt ist er in ein Elastomerteil der Leitungsdurchführung integriert. Dieses Elastomerteil kann bspw. die Manschette und/oder ein Flanschteil bilden (siehe unten), welches an einer Seitenfläche des Wand- oder Bodenelements anliegt. In anderen Worten ist der Injektionskanal bevorzugt in einem Elastomerabschnitt ausgebildet, der monolithisch mit der Manschette und/oder dem Flansch ist. Der Injektionskanal hat bevorzugt eine dem Wand- oder Bodenelement abgewandte Injektionsöffnung, über welche die Füllsubstanz zugeführt wird. Im Einzelnen kann an diese Injektionsöffnung bspw. eine Kartusche angeschlossen und kann die Füllsubstanz über die Injektionsöffnung in den Injektionskanal eingedrückt werden.

Von der Injektionsöffnung weg in die Durchlassöffnung hinein gibt es bevorzugt einen Abzweig im Injektionskanal, verzweigt sich also der Injektionskanal. Dies kann bspw. eine Verteilung der Füllsubstanz verbessern bzw. die Montage vereinfachen (etwa im Vergleich zu einem sequenziellen Befüllen über mehrere Injektionsöffnungen). Aufgrund des Abzweigs im Injektionskanal können derselben Injektionsöffnung mehrere Mündungsöffnungen zugeordnet sein. Diese Mündungsöffnungen können in unterschiedliche Füllvolumina in der Durchlassöffnung münden. Die Füllvolumina können auf unterschiedlichen Radialpositionen angeordnet sein, bspw. radial inner- und radial außerhalb einer Montagehülse.

In bevorzugter Ausgestaltung sind eine erste Mündungsöffnung, die in ein erstes Füllvolumen mündet, und eine zweite Mündungsöffnung, die in ein zweites Füllvolumen mündet, unterschiedlich groß. Damit kann eine Verteilung der Füllsubstanz beeinflusst werden, lässt sich also über die größere Mündungsöffnung dem entsprechenden Füllvolumen mehr Füllsubstanz zuführen. Im Allgemeinen kann eines der Füllvolumina auch in einem Innenraum liegen (siehe unten), kann sich die Füllsubstanz also an die Leitung anlegen. In bevorzugter Ausgestaltung sind das erste und zweite Füllvolumen jedoch Teil des Ringraums, also bspw. außerhalb der Durchführungshülse angeordnet. Bevorzugt kann das erste Füllvolumen radial innerhalb einer Montagehülse (siehe nachstehend im Detail), insbesondere eines auf der Durchführungshülse angeordneten Elastomermantels, angeordnet sein. Das zweite Füllvolumen ist dann vorzugsweise radial außerhalb der Durchführungshülse bzw. des Elastomermantels vorgesehen. Bevorzugt ist die zweite Mündungsöffnung größer als die erste Mündungsöffnung, wird also dem Füllvolumen radial außerhalb mehr Füllsubstanz zugeführt. So kann bspw. das Flanschelement verstärkt hinterfüllt bzw. -schäumt werden, bevor der Ringraum aufgefüllt wird.

Gemäß einer bevorzugten Ausführungsform wird die Leitung in die Durchführungshülse eingeschäumt, wird also ein von der Leitung und der Durchführungshülse begrenzter Raum durch Einbringen einer fließfähigen Füllsubstanz, die dann expandiert, zumindest teilweise aufgefüllt, vorzugsweise vollständig. Bevorzugt erfolgt dies nach dem Einbau der Leitungsdurchführung in die Durchlassöffnung, also nach dem Einschäumen der Durchführungshülse in das Wand- oder Bodenelement. In anderen Worten wird zunächst zur Befestigung der Leitungsdurchführung in den Raum radial außerhalb der Durchführungshülse Füllsubstanz eingebracht (zwischen Außenwandfläche der Durchführungshülse und Laibung), bevor in den von der bzw. den Leitung(en) durchsetzte Innenraum in einem nachfolgenden Schritt Füllsubstanz eingebracht wird. Hierfür können bspw. gesonderte Injektionskanäle vorgesehen sein, die jeweils in einen der Räume münden.

In bevorzugter Ausgestaltung ist beim Einbringen der Füllsubstanz in den Innenraum in der Manschette ein erstes Abschlussstück angeordnet, welches den Innenraum axial verschließt. Dabei kann das Abschlussstück eine oder mehrere Durchgangsöffnungen aufweisen, die von einer jeweiligen Leitung durchsetzt werden. Die Leitungen können nach dem Einschäumen der Leitungsdurchführung und vor dem Ausschäumen des Innenraums verlegt werden, bspw. mindestens zwei Fluidleitungen (Vor- und Rücklauf) und optional zusätzlich ein Elektrokabel und/oder (ein) Leerrohr bzw. -rohre.

Beim Ausschäumen des Innenraums kann sich die fließfähigen Füllsubstanz direkt an die Fluidleitungen anlegen, diese können aber alternativ bspw. auch jeweils mit einer Isolierung ummantelt sein. In anderen Worten kann auf einer jeweiligen Einzel-Leitung, z. B. Fluidleitung, eine isolierte Hülse angeordnet sein, an welche sich die Füllsubstanz anlegt.

Das erste Abschlussstück kann bspw. aus einem Hartkunststoff vorgesehen sein, vgl. die vorstehenden Angaben bezüglich weiterer Materialdetails. Alternativ ist jedoch auch ein geschäumtes Kunststoffmaterial möglich, bspw. geschäumtes Polypropylen, insbesondere expandiertes Polypropylen. Das geschäumte Kunststoffmaterial kann bspw. eine Rohdichte (auch geometrische Dichte bzw. Raumgewicht genannt) von höchstens 300 kg/m³, 200 kg/m³, 150 kg/m³ bzw. 100 kg/m³ haben, mit möglichen (davon unabhängigen) Untergrenzen bei z. B. mindestens 15 kg/m³, 20 kg/m³ bzw. 25 kg/m³.

Wie eingangs erwähnt, kann ein Vorteil darin liegen, dass die Leitungsdurchführung mit Manschette einerseits zum Hindurchführen und Abdichten integrierter Leitungstypen (Monoblockrohre) mit entsprechend großen Außendurchmessern geeignet ist. Mit der baugleichen Leitungsdurchführung lassen sich unter Verwendung des ersten Abschlussstücks jedoch auch Einzel-Leitungen verlegen, sowie aufgrund des Ausschäumens zugleich abdichten und isolieren.

In bevorzugter Ausgestaltung wird die Manschette jedenfalls beim Einbringen der Füllsubstanz mit einem aufgesetzten Spannelement nach radial innen gegen das erste Abschlussstück gedrückt, siehe vorne bezüglich weiterer Details. Bevorzugt verbleibt das Spannelement auch nach dem Härten der Füllsubstanz auf der Manschette.

Gemäß einer bevorzugten Ausführungsform ist der Innenraum beim Einbringen der Füllsubstanz in beiden Axialrichtungen mit jeweils einem Abschlussstück verschlossen, kann also ein erstes Abschlussstück in der Manschette angeordnet sein (siehe vorne) und ein zweites Abschlussstück z. B. am entgegengesetzten axialen Ende der Durchführungshülse. Das zweite Abschlussstück kann bspw. aufgrund einer Übermaßpassung in der Durchführungshülse gehalten sein, alternativ oder zusätzlich ist jedoch bspw. auch ein Formschluss möglich. Im Einzelnen kann das zweite Abschlussstück bspw. über einen Bajonett-Mechanismus in der Durchführungshülse gehalten, also eingesetzt und über eine Drehbewegung arretiert sein. Unabhängig von diesen Details verbleibt das zweite Abschlussstück nach dem Ausschäumen bevorzugt in der Durchführungshülse, was analog für das erste Abschlussstück gilt.

Auch das zweite Abschlussstück kann mit einer oder mehreren Durchgangsöffnungen vorgesehen sein, die jeweils von einer Leitung durchsetzt werden. Egal ob im Falle des ersten und/oder zweiten Abschlussstücks kann eine solche Durchgangsöffnung originär verschlossen sein, etwa mit einem eingesetzten Stopfen oder einem integral mit dem übrigen Abschlussstück ausgebildeten Blinddeckel, wobei vor oder mit dem Hindurchführen der jeweiligen Leitung die Durchgangsöffnung geöffnet wird. Hierbei sind auch Kombinationen möglich, es kann eine oder können mehrere Durchgangsöffnungen bereits initial offen sein (z. B. für Vor- und Rücklauf), wobei eine andere oder andere Durchgangsöffnung(en) initial verschlossen und bedarfsweise öffenbar sind (z. B. für ein Elektrokabel).

Das zweite Abschlussstück kann im Allgemeinen auch einstückig bzw. monolithisch mit dem der Durchführungshülse vorgesehen sein. Dieses kann an seinem der Manschette entgegengesetzten Ende also bspw. mit einer Verschlusswand versehen sein, die bspw. eine oder mehrere Durchgangsöffnungen bildet (für Einzel-Leitungen). Diese Durchgangsöffnungen können, wie erwähnt, dabei jeweils zunächst verschlossen und öffenbar sein. Alternativ oder zusätzlich kann auch die Verschlusswand insgesamt austrennbar sein, bspw. über eine Sollbruchstelle zur Durchführungshülse hin, um bei der Verlegung eines Monoblockrohres bspw. im Wesentlichen den gesamten Querschnitt nutzbar zu machen

Gemäß einer bevorzugten Ausführungsform ist axial zwischen der Manschette und der Durchführungshülse ein Flanschteil vorgesehen. Bevorzugt ist zumindest eine Lage des Flanschteils aus einem Elastomermaterial gebildet (siehe vorne bezüglich möglicher Materialdetails) diese Elastomerlage kann bspw. mit einer Butyllage kombiniert sein. Das Flanschteil kann eine Abdichtung zu einer Seitenwandfläche des Wand- oder Bodenelements hin schaffen, bspw. mittels der Butyllage großflächig aufgeklebt werden (und/oder angedrückt werden, siehe unten). Bevorzugt kann das Flanschteil, bzw. die zumindest eine Elastomerlage davon, monolithisch mit der Manschette vorgesehen sein, sind die beiden also zusammenhängend aus demselben Elastomermaterial geformt.

In bevorzugter Ausgestaltung wird das Flanschteil mit einem Andrückelement gegen die Seitenwandfläche des Wand- oder Bodenelements gedrückt, bspw. mit einzelnen Schrauben oder bevorzugt mit einem Spannring (der mit dem Wand- oder Bodenelement verschraubt werden kann). Der Spannring kann hierbei segmentiert oder umlaufend in sich geschlossen sein. Auch unabhängig von der Geometrie kann er aus einem Hartkunststoff oder bevorzugt aus Metall vorgesehen werden. Bevorzugt kann die Elastomerlage zum Andrücken mit dem Andrückeelement eine gewisse Mindestdicke in Axialrichtung haben, bspw. von mindestens 0,4 cm, 0,5 cm bzw. 0,6 cm (mit möglichen Obergrenzen bei z. B. höchstens 2 cm, 1,5 cm bzw. 1 cm).

Damit kann sich eine stabile Fixierung realisieren lassen, was auch eine Zugentlastung schaffen kann, insbesondere in Verbindung mit der monolithischen Ausgestaltung mit der Manschette. Dies kann, speziell bei den großen Leitungsdurchmessern, eine Axial- bzw. auch Drehbeanspruchung der Schnittstelle zur Durchlassöffnung verringern, also eine mechanische Entlastung der Füllsubstanz radial außerhalb der Durchführungshülse schaffen (und damit z. B. eine Beeinträchtigung von deren Dichtfunktion vorbeugen).

Bei einer bevorzugten Ausführungsform weist die Leitungsdurchführung eine Montagehülse auf, die radial außerhalb der Durchführungshülse angeordnet ist. In ein radial zwischen Durchführungs- und Montagehülse ausgebildetes Füllvolumen wird die Füllsubstanz eingebracht, und sie kann dann über Austrittsöffnungen in der Montagehülse nach radial außen austreten (zur Laibung hin). Dabei können diese Austrittsöffnungen bereits initial offen sein, sie können sich jedoch bspw. auch erst unter dem Druck der expandierenden Füllsubstanz öffnen. Die Montagehülse kann starr, etwa in Form eines Gitters, oder flexibel vorgesehen sein. Es kann sich insbesondere um einen Elastomermantel handeln, der unter dem Druck der Füllsubstanz zur Laibung hin geweitet wird. Dabei kann die Füllsubstanz aus in dem Elastomermantel vorgesehenen Öffnungen, bspw. Schlitzen, austreten. Egal ob starr oder elastisch, kann die Montagehülse die Füllsubstanz anfänglich nach dem Einbringen, also in einem Zustand von im Verhältnis noch geringer Viskosität, beisammenhalten und damit einem unkontrollierten Ablaufen vorbeugen (z. B. in Hohlkammern einer Ziegelwand).

Die Montagehülse ist bevorzugt aus einem Elastomermaterial vorgesehen, vgl. die Definition vorstehend. Dieser Elastomermantel kann sich dann bspw. unter dem Druck der eingebrachten Füllsubstanz weiten. In dem Elastomermantel können Austrittsöffnungen für die Füllsubstanz vorgesehen sein, die sich unter dem zunehmenden Druck der Füllsubstanz weiten und so den Austritt der Füllsubstanz begünstigen können. Ist die Füllsubstanz anfangs noch vergleichsweise flüssig, wird sie in dem Elastomermantel zusammengehalten, mit zunehmender Expansion und Viskosität tritt sie aus. Unabhängig von diesen Details kann der Elastomermantel bevorzugt einstückig, insbesondere monolithisch, mit der Manschette und/oder dem Flanschelement (z. B. einer Lage davon) ausgebildet sein. Besonders bevorzugt kann es sich um ein Elastomerteil handeln, welches als Spritzgussteil hergestellt werden bzw. sein kann.

Generell kann eine Besonderheit auch darin liegen, dass sowohl radial inner- als auch radial außerhalb der Montagehülse Füllsubstanz zugeführt, also jeweils eine Mündungsöffnung mündet. Damit kann bspw. bei den großen Durchmessern das Ausschäumen verbessert werden. Dies kann auch unabhängig von einem Abzweig im Injektionskanal realisiert sein, also bspw. auch bei separaten Injektionskanälen für die unterschiedlichen Volumina.

In bevorzugter Ausgestaltung ist die aus dem Elastomermaterial vorgesehene Montagehülse auf die Durchführungshülse aufgezogen. Die Montagehülse kann also mit einer Untermaßpassung und/oder axial formschlüssig auf der Durchführungshülse sitzen. Im Einzelnen können die Durchführungshülse und die Montagehülse als separate Teile hergestellt und dann zusammengesetzt werden. Die Untermaßpassung und/oder der axiale Formschluss können bspw. an einem der Manschette/dem Flanschelement entgegengesetzten Ende der Montagehülse ausgebildet sein, etwa an einem nach radial innen gewandten Kragen davon. Bevorzugt ist auch am axial entgegengesetzten Ende der Durchführungshülse eine Untermaßpassung und/oder ein axialer Formschluss zwischen Durchführungshülse und Montagehülse ausgebildet. Für einen axialen Formschluss kann bspw. ein Vorsprung in eine komplementäre Vertiefung greifen, etwa ein Vorsprung an der Durchführungshülse in eine Vertiefung an der Montagehülse (etwa an dem Kragen).

Gemäß einer bevorzugten Ausführungsform ist in einem Füllvolumen der Leitungsdurchführung ein Steg vorgesehen, der sich zumindest anteilig in Umlaufrichtung erstreckt und die Füllsubstanz entsprechend anteilig in Umlaufrichtung lenkt. Hierfür kann sich der Steg radial erheben, entweder nach radial innen oder nach radial außen. Das Lenken der Füllsubstanz kann z. B. mit Blick auf die relativ große Durchlassöffnungsdurchmesser von Vorteil sein, bspw. ein umlaufendes Auffüllen mit Füllsubstanz unterstützen. Die "zumindest anteilige" Erstreckung in Umlaufrichtung kann im Allgemeinen mit einer anteiligen Erstreckung in Axialrichtung kombiniert sein, der Steg kann sich also zugleich in Umlauf- und Axialrichtung erstrecken (alternativ aber auch ausschließlich in Umlaufrichtung).

Im Allgemeinen kann der Steg bspw. auch in einem inneren Füllvolumen angeordnet sein, z. B. zwischen der Durchführungshülse der/den Leitung(en). Bevorzugt ist er jedoch einem außenseitigen Füllvolumen zugeordnet, also jedenfalls radial außerhalb der Durchführungshülse. Weiter bevorzugt ist er auch radial außerhalb der Montagehülse vorgesehen, insbesondere eines Elastomermantels. Im Allgemeinen kann der Steg an der Innen- oder Außenwandfläche der Durchführungshülse angeordnet sein, etwa monolithisch mit dieser ausgebildet. Bevorzugt ist der Steg jedoch an einer Innen- oder Außenwandfläche der Montagehülse angeordnet, besonders bevorzugt an deren Außenwandfläche. In anderen Worten ist der Steg bevorzugt als Teil des Elastomermantels ausgebildet, besonders bevorzugt an dessen Außenwand.

Unabhängig von diesen Details ist der Steg bevorzugt axial folgend auf eine Mündungsöffnung vorgesehen, sodass die über die Mündungsöffnung in das Füllvolumen eintretende Füllsubstanz auf den Steg trifft. In Umlaufrichtung kann sich der Steg bspw. über mindestens 10°, 20° oder 30° erstrecken, mit möglichen Obergrenzen bei bspw. höchstens 270°, 180° bzw. 120° (wenngleich im Allgemeinen auch ein vollständiger Umlauf nicht ausgeschlossen ist, also 360°).

Die Variante "Steg" kann auch unabhängig von der hauptanspruchsgemäßen Manschette von Interesse und soll entsprechend offenbart sein. Gegenstand der Offenbarung ist also insbesondere eine
Verwendung einer Leitungsdurchführung,
welche eine Durchführungshülse, durch die eine Leitung entlang einer Mittenachse der Durchführungshülse hindurchführbar ist, aufweist,
zum Einbau in eine Durchlassöffnung in einem Wand- oder Bodenelement eines Gebäudes, wobei
   - die Leitungsdurchführung solchermaßen in die Durchlassöffnung eingesetzt wird, dass die Durchführungshülse in der Durchlassöffnung angeordnet ist, und
   - die Durchführungshülse in dieser Montageposition befestigt wird, indem in einen Ringraum zwischen Durchführungshülse und Laibung der Durchlassöffnung eine zunächst fließfähige Füllsubstanz eingebracht wird, die dann expandiert und in der Durchlassöffnung härtet,
wobei in einem Füllvolumen der Leitungsdurchführung ein Steg vorgesehen, der sich zumindest anteilig in Umlaufrichtung erstreckt und die Füllsubstanz entsprechend anteilig in Umlaufrichtung lenkt.

Bevorzugt kann ein der Manschette/dem Flanschelement entgegengesetztes Ende der Leitungsdurchführung innerhalb der Durchlassöffnung angeordnet sein, also nicht daraus hervorstehen. Dies bezieht sich auf den montierten Zustand, wenn also bspw. das Flanschelement an der Seitenfläche des Wand- oder Bodenelements anliegt. An dem der Manschette/dem Flanschelement entgegengesetzten Ende kann die Leitungsdurchführung radial außenseitig bevorzugt eine Dichtlippe aufweisen, die sich nach radial außen erhebt. Diese Dichtlippe kann sich zur Laibung der Durchlassöffnung hin erstrecken bzw. sich an diese anlegen, sie kann ein radial äußerstes Füllvolumen axial begrenzen. Hierbei kann die Dichtlippe umlaufend in sich geschlossen oder an einer Stelle unterbrochen sein (bspw. unten), um überschüssige Füllsubstanz gezielt austreten zu lassen. Unabhängig von diesen Details ist die Dichtlippe bevorzugt monolithisch mit dem Flanschelement (z. B. einer Lage davon) und/oder der Manschette und/oder der Montagehülse (Elastomermantel) ausgebildet, also ebenfalls Teil des Elastomerteils. Sie kann bspw. über die Montagehülse (den Elastomermantel) mit Flanschelement und Manschette zusammenhängen.

Unabhängig von dem Dichtkragen kann, wenn ein Ende der montierten Leitungsdurchführung innerhalb der Durchlassöffnung angeordnet ist, ein verbleibender Abschnitt der Durchlassöffnung bevorzugt mit einem oder mehreren Füllelementen aus einem geschäumten Kunststoffmaterial aufgefüllt werden (vgl. die nachstehende Definition von "geschäumten Kunststoffmaterial"), also bspw. mit einer oder mehreren Scheiben aus geschäumtem oder extrudierten Kunststoff, z. B. Polystyrol-Extruderschaumstoff (XPS). Diese können bspw. einem Lochraster der Manschette(n) bzw. Durchlassöffnung(en) im Elastomerteil entsprechend gelocht sein.

Eine bevorzugte Ausführungsform betrifft eine in die Durchführungshülse eingesetzte Pressdichtung. Diese kann im Allgemeinen auch als Blindverschluss dienen, bevorzugt dichtet sie jedoch eine oder mehrere Einzel-Leitungen relativ zur Durchführungshülse. Dabei kann die Pressdichtung im Allgemeinen auch gemäß der vorstehenden Schilderung als zweites Abschlussstück genutzt werden, welches einen Innenraum zum Einbringen einer Füllsubstanz axial begrenzt. Bevorzugt wird bei der Verwendung der Pressdichtung der Innenraum der Durchführungshülse jedoch nicht gesondert ausgeschäumt, stattdessen dichtet die Pressdichtung die Leitung(en) zur Durchführungshülse.

Die Kombination aus eingeschäumter Durchführungshülse und eingesetzter Pressdichtung kann bspw. dahingehend von Vorteil sein, dass erstere eine definierte Schnittstelle schafft (bspw. auch die Laibung durch Einschlüsse oder Kammern etc. beeinträchtigt ist). Damit wird einerseits eine definierte Oberfläche für die Abdichtung mit der Pressdichtung geschaffen, bei welcher es sich andererseits um ein zuverlässiges und reversibel spann-/lösbares Dichtmittel handelt. Es lässt sich also bspw. auch nachträglich eine zusätzliche Leitung verlegen (die Pressdichtung z.B. temporär lösen und dann wieder verspannen).

Zum Abdichten weist die Pressdichtung einen Elastomerkörper auf, der mit einer Spanneinrichtung verspannt und damit dichtend angepresst wird, bspw. nach radial außen gegen die Durchführungshülse. Die Verspannung des Elastomerkörpers und der damit aufgebaute radiale Druck kann bspw. auch ein zusätzliches Andrücken der eingeschäumten Dichthülse bewirken, folglich wird auch die Füllsubstanz gegen die Laibung der Durchlassöffnung gedrückt (und damit die Dichtfunktion verstärkt). Zum Verspannen des aus Elastomermaterial vorgesehenen Elastomerkörpers sind bevorzugt axial beidseits davon Presskörper angeordnet, die durch Anziehen eines Spannbolzens, typischerweise mehrerer umlaufend verteilt angeordneter Spannbolzen, axial aufeinander zubewegt werden. Infolgedessen wird der dazwischen angeordnete Elastomerkörper axial gestaucht und radial dichtend angedrückt, nach außen gegen die Durchführungshülse und im Falle einer hindurchgeführten Leitung nach radial innen gegen diese.

Die Durchführungshülse mit eingesetzter Pressdichtung kann in Kombination mit einer Leitungsdurchführung mit Manschette, aber auch unabhängig davon von Interesse sein. Die Manschette kann bspw. zum Anschließen eines Schutzrohres genutzt werden, in welchem die Leitung(en) geführt ist/sind, bspw. im Erdreich.

Alternativ kann die Pressdichtung in der Durchführungshülse aber auch ohne eine Manschette von Interesse sein, offenbart sein soll also auch:
Verwendung einer Leitungsdurchführung,
welche eine Durchführungshülse, durch die eine Leitung entlang einer Mittenachse der Durchführungshülse hindurchführbar ist, aufweist,
zum Einbau in eine Durchlassöffnung in einem Wand- oder Bodenelement eines Gebäudes, wobei
   - die Leitungsdurchführung solchermaßen in die Durchlassöffnung eingesetzt wird, dass die Durchführungshülse in der Durchlassöffnung angeordnet ist, und
   - die Durchführungshülse in dieser Montageposition befestigt wird, indem in einen Ringraum zwischen Durchführungshülse und Laibung der Durchlassöffnung eine zunächst fließfähige Füllsubstanz eingebracht wird, die dann expandiert und in der Durchlassöffnung härtet, und
   - wobei in der Durchführungshülse eine Pressdichtung angeordnet ist oder wird, mit welcher bevorzugt nach radial außen gegen die Durchführungshülse und weiter bevorzugt nach radial innen gegen eine Leitung (z.B. Einzel-Leitung) gedichtet wird.
Hierbei sind gleichwohl Kombinationen mit anderen der vorliegend offenbarten Ausführungsformen möglich, insbesondere kann die Durchführungshülse mit einem Flanschteil ausgestattet sein, welches zu einer Seitenfläche des Wand- oder Bodenelements hin dichtet (siehe vorne). Der Einbau der Durchführungshülse und die Abdichtung zur Seitenfläche können damit bspw. innerhalb desselben Gewerks erfolgen, was z. B. einen Abstimmungsaufwand reduzieren und Fehlerquellen verringern kann.

Gemäß einer bevorzugten Ausführungsform, die insbesondere eine Alternative zur Pressdichtung sein kann, ist bzw. wird in die Durchführungshülse ein Systemdeckel eingesetzt. Dieser kann in montierter Position axial formschlüssig in der Durchführungshülse gehalten sein, bspw. über einen Drehmechanismus, insbesondere einen Bajonett-Mechanismus. Dazu können an einer Innenwandfläche der Durchführungshülse und einer Außenwandfläche des Systemdeckel zueinander passende Vorsprünge und Konturen vorgesehen sein, zusätzlich kann mit der Arretierung des Systemdeckels ein Dichtelement komprimiert werden, welches den Systemdeckel relativ zur Durchführungshülse dichtet.

Die eingeschäumte Durchführungshülse mit Systemdeckel kann in Verbindung mit der Manschette (und einem Schutzrohr darin) aber auch unabhängig davon von Interesse sein. Offenbart sein soll auch:
Verwendung einer Leitungsdurchführung,
welche eine Durchführungshülse, durch die eine Leitung entlang einer Mittenachse der Durchführungshülse hindurchführbar ist, aufweist,
zum Einbau in eine Durchlassöffnung in einem Wand- oder Bodenelement eines Gebäudes, wobei
   - die Leitungsdurchführung solchermaßen in die Durchlassöffnung eingesetzt wird, dass die Durchführungshülse in der Durchlassöffnung angeordnet ist, und
   - die Durchführungshülse in dieser Montageposition befestigt wird, indem in einen Ringraum zwischen Durchführungshülse und Laibung der Durchlassöffnung eine zunächst fließfähige Füllsubstanz eingebracht wird, die dann expandiert und in der Durchlassöffnung härtet,
   - und wobei in der Durchführungshülse ein Systemdeckel angeordnet ist oder wird, der axial formschlüssig in der Durchführungshülse gehalten ist, vorzugsweise über einen Drehmechanismus, insbesondere Bajonett-Mechanismus

Im montierten Zustand kann eine Leitung den Systemdeckel durchsetzen und relativ dazu gedichtet sein. Dazu kann der Systemdeckel bspw. einen von der Leitung durchsetzten Elastomerstutzen aufweisen, der zusätzlich mit einem Spannmittel, z. B. einer Spannschelle, angedrückt wird. Bevorzugt kann die Relativabdichtung über einen Schrumpfschlauch erfolgen, der im aufgeschrumpften Zustand dichtend an der Leitung anliegt, wobei ein Kaltschrumpfen besonders bevorzugt ist.

Gemäß einer bevorzugten Ausführungsform ist bzw. wird an die Leitung gebäudeaußenseitig eine Wärmepumpe oder eine Wärmetauscherstruktur einer Wärmepumpe angeschlossen, vgl. die Anmerkungen eingangs. Hinsichtlich dieser Anwendung kann ein Vorteil der vorliegenden Leitungsdurchführung darin liegen, dass sie bedarfsweise mit unterschiedlichen Leitungen bzw. Einzel-Leitungen belegt werden kann, also dem Monteur vor Ort eine flexible und in der Anwendung zugleich einfache Lösung bietet.

Die Erfindung betrifft auch eine Leitungsdurchführungsanordnung mit einer vorliegend offenbarten Leitungsdurchführung, die in eine Durchlassöffnung in einem Wand- oder Bodenelement eines Gebäudes eingebaut ist. Die Leitungsdurchführung weist bevorzugt eine Manschette auf und ist solchermaßen eingebaut, dass diese aus der Durchlassöffnung hervorsteht. Weiter bevorzugt weist die Leitungsdurchführungsanordnung eine Leitung auf, welche durch die Leitungsdurchführung verlegt ist, wobei sich die Manschette nach radial innen dichtend zu der Leitung hin anliegt, bspw. an die Leitung selbst oder an ein Abschlussstück.

Die vorstehend diskutierten Varianten lassen sich in Form der folgenden Aspekte zusammenfassen:
1. Verwendung einer Leitungsdurchführung (1),
   welche eine Durchführungshülse (2), durch die eine Leitung (200) entlang einer Mittenachse (20) der Durchführungshülse (2) hindurchführbar ist, und
   eine Manschette (3) aufweist, welche axial an die Durchführungshülse (2) anschließt,
   wobei die Manschette (3) aus einem Elastomermaterial vorgesehen ist, zum Einbau in eine Durchlassöffnung (1001) in einem Wand- oder Bodenelement (100) eines Gebäudes, wobei

   - die Leitungsdurchführung (1) solchermaßen in die Durchlassöffnung (1001) eingesetzt wird, dass die Manschette (3) in einer Montageposition der Leitungsdurchführung (1) axial außerhalb der Durchlassöffnung (1001) angeordnet ist, und
   - die Durchführungshülse (2) in dieser Montageposition befestigt wird, indem in einen Ringraum (10) zwischen Durchführungshülse (2) und Laibung (1002) der Durchlassöffnung (1001) eine zunächst fließfähige Füllsubstanz (70) eingebracht wird, die dann expandiert und in der Durchlassöffnung (1001) härtet, und
   - sich die Manschette (3) nach radial innen dichtend zu einer durch die Durchführungshülse (2) gelegten Leitung (200) hin anlegt.
2. Verwendung nach Aspekt 1, bei welcher zumindest eine Innenwandfläche (3.1) der Manschette (3) in einem Längsschnitt betrachtet mit mehreren nach radial innen hervortretenden Erhebungen (31) geformt ist, die axial aufeinander folgend angeordnet sind.
3. Verwendung nach Aspekt 1 oder 2, bei welcher eine Außenwandfläche (210) der Leitung (200) in einem Längsschnitt betrachtet mit axial aufeinanderfolgenden Erhebungen (201) und Vertiefungen (202) geformt ist.
4. Verwendung nach einem der vorstehenden Aspekte, bei welcher die Durchführungshülse (2) aus einem im Vergleich zu dem Elastomermaterial härteren Durchführungshülsenmaterial vorgesehen ist.
5. Verwendung nach einem der vorstehenden Aspekte, bei welcher die Leitung (200) einen Außendurchmesser von mindestens 8 cm hat.
6. Verwendung nach einem der vorstehenden Aspekte, bei welcher die Leitung (200) ein Monoblockrohr (205) ist.
7. Verwendung nach einem der vorstehenden Aspekte, bei welcher die Manschette (3) mit einem aufgesetzten Spannelement (50) nach radial innen gegen die Leitung (200) gedrückt wird.
8. Verwendung nach einem der vorstehenden Aspekte, bei welcher in einen von der Durchführungshülse (2) gebildeten Innenraum (310), welchen die hindurchgeführte Leitung (200) durchsetzt, eine zunächst fließfähige Füllsubstanz (170) eingebracht wird, die dann expandiert und in der Durchführungshülse (2) härtet.
9. Verwendung nach Aspekt 8, bei welcher beim Einbringen der Füllsubstanz (170) in den Innenraum (310) in der Manschette (3) ein erstes Abschlussstück (301) angeordnet ist, welches den Innenraum (310) zumindest teilweise axial verschließt.
10. Verwendung nach Aspekt 9, bei welcher die Manschette (3) mit einem aufgesetzten Spannelement (50) nach radial gegen innen gegen das erste Abschlussstück (301) gedrückt wird.
11. Verwendung nach einem der Aspekte 8 bis 10, bei welchem der Innenraum (310) beim Einbringen der Füllsubstanz (170) in beiden Axialrichtungen mit jeweils einem Abschlussstück (301, 302) zumindest teilweise axial verschlossen ist.
12. Verwendung nach einem der vorstehenden Aspekte, bei welcher die Leitungsdurchführung (1) ein Flanschteil (4) aufweist, von welchem zumindest eine Lage (44) aus einem Elastomermaterial vorgesehen ist und welches auf einer Axialposition zwischen der Durchführungshülse (2) und der Manschette (3) angeordnet ist.
13. Verwendung nach Aspekt 12, bei welcher das Flanschteil (4) in der Montageposition mit einem Andrückelement (60), vorzugsweise einem Spannring (61), gegen eine Seitenfläche (100.1) des Wand- oder Bodenelements (100) gedrückt wird.
14. Verwendung nach einem der vorstehenden Aspekte, bei welcher die Leitungsdurchführung (1) eine Montagehülse (16) aufweist, die radial außerhalb der Durchführungshülse (2) angeordnet ist, wobei die Füllsubstanz (70) in ein Füllvolumen radial zwischen der Montagehülse (16) und der Durchführungshülse (2) eingebracht wird.
15. Leitungsdurchführungsanordnung, mit
   einer Leitungsdurchführung (1),
      welche eine Durchführungshülse (2), durch die eine Leitung (200) entlang einer Mittenachse (20) der Durchführungshülse (2) hindurchführbar ist, und
      eine Manschette (3) aufweist, welche axial an die Durchführungshülse (2) anschließt,
      wobei die Manschette (3) aus einem Elastomermaterial vorgesehen ist, und
   einem Wand- oder Bodenelement eines Gebäudes,
   wobei die Leitungsdurchführung (1) in eine Durchlassöffnung (1001) in dem Wand- oder Bodenelement (100) eingebaut ist, wobei
   - die Leitungsdurchführung (1) solchermaßen in die Durchlassöffnung (1001) eingesetzt ist, dass die Manschette (3) axial außerhalb der Durchlassöffnung (1001) angeordnet ist, und
   - die Durchführungshülse (2) befestigt ist, indem in einen Ringraum (10) zwischen Durchführungshülse (2) und Laibung (1002) der Durchlassöffnung (1001) eine Füllsubstanz (70) eingebracht ist,
   - sich die Manschette (3) nach radial innen dichtend zu einer durch die Durchführungshülse (2) gelegten Leitung (200) hin anlegt.

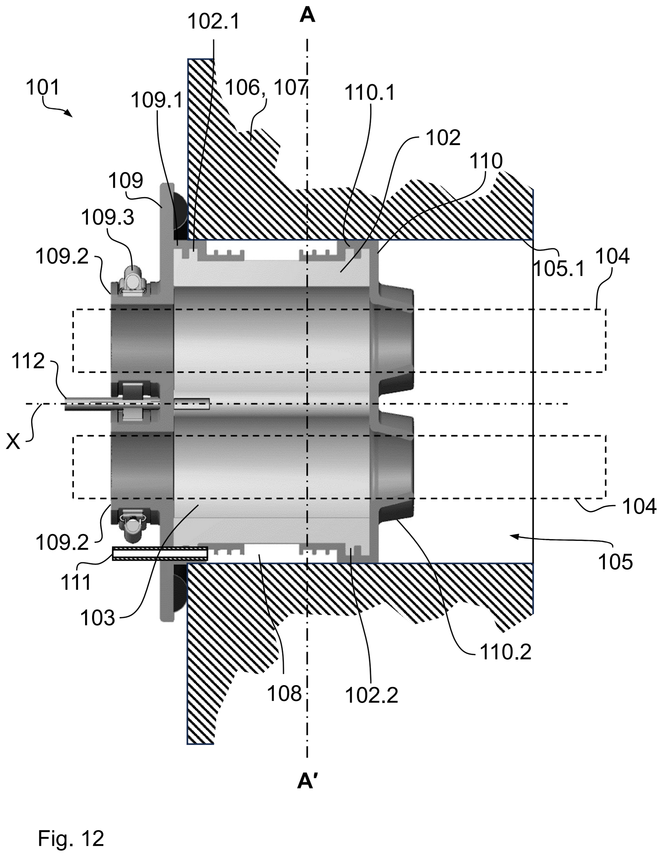

Ein weiterer Gegenstand, der nachstehend diskutiert und anhand der Figuren 12 bis 16 weiter im Detail illustriert wird, betrifft die Verwendung einer Leitungsdurchführung zum Einbau in ein Wand- oder Bodenelement eines Gebäudes.

Im Zuge der Verwendung wird die Leitungsdurchführung in eine Durchlassöffnung eingesetzt und darin befestigt. Dabei kann die Leitung bereits hindurchgeführt sein und mit eingebaut werden; alternativ kann aber ebenso zunächst ein Leerrohr hindurchgeführt und befestigt werden, wobei die eigentliche Leitung dann erst später verlegt wird. Bei der Durchlassöffnung kann es sich insbesondere um eine Bohrung handeln, die nachträglich in ein bereits bestehendes Wand- oder Bodenelement des Gebäudes eingebracht wird, bspw. im Zuge einer nachträglichen Umrüstung einer Gebäudeheizung. Ein bevorzugter Anwendungsfall kann hierbei eine Anbindung eines gebäudeinnenseitig liegenden Haustechnikraums an eine gebäudeaußenseitige angeordnete Außeneinheit einer Wärmepumpe sein, bevorzugt handelt es sich bei der Leitung um Warm- und Kaltwasserleitungen eines Kältemittelkreislaufs sowie Leitungen zur Versorgung der Außeneinheit mit elektrischer Energie und bspw. Steuerungsdaten.

Der vorliegenden Erfindung liegt das technische Problem zugrunde, eine vorteilhafte Verwendung bzw. Leitungsdurchführung als Gegenstand der Verwendung anzugeben.

Dies wird erfindungsgemäß mit den Merkmalen gemäß Anspruch 1 gelöst. Die entsprechende Leitungsdurchführung weist einen Stützkörper auf, der nach dem Einsetzen in eine Durchlassöffnung zwei separate Kammern bildet. Zur Montage der Leitungsdurchführung in der Durchlassöffnung eines Wand- oder Bodenelements wird in die äußere Kammer die zunächst fließfähigen Füllsubstanz eingebracht, die dann expandiert und den Stützkörper in der Durchlassöffnung hält. Aufgrund des durch den Stützkörper reduzierten, vglw. kleinen Volumens der äußeren Kammer wird insgesamt weniger von der Füllsubstanz benötigt, was bspw. hinsichtlich Aushärtezeit und Kosten vorteilhaft sein kann. Zudem kann die zunächst fließfähige Füllsubstanz diese vglw. kleine äußere Kammer zuverlässiger füllen, was bspw. einer Lunkerbildung während ihrer anschließenden Expansion vorbeugt.

Demgegenüber wird die Leitung durch die innere Kammer des Stützkörpers geführt und dieser gegen die Leitung abgedichtet. Dies ermöglicht es, die Montage der Leitungsdurchführung in der Durchlassöffnung zu vereinfachen, da bspw. der Stützkörper zuerst in der Durchlassöffnung befestigt und anschließend die Leitung durch diesen hindurch geführt werden kann. Jedoch kann, wenn dies gewünscht ist, auch zunächst die Leitung durch die innere Kammer des Stützkörpers geführt und dieser anschließend mitsamt der Leitung in die Durchlassöffnung eingebaut werden.

Bevorzugte Ausgestaltungen finden sich in den abhängigen Ansprüchen und der gesamten Offenbarung, die sich stets sowohl auf Verwendungs- als auch Verfahrens- und Vorrichtungsaspekte bezieht; jedenfalls implizit ist die Offenbarung stets hinsichtlich sämtlicher Anspruchskategorien zu lesen.

Die Füllsubstanz ist bevorzugt solchermaßen vorgesehen, dass sie nach dem Einbringen expandiert, also an Volumen zunimmt. Beim Einbringen ist sie noch fließfähig, die Fließfähigkeit nimmt nach dem Einbringen im Zuge des Härtens ab (die Viskosität nimmt also zu). Als Füllsubstanz wird bevorzugt ein Harz vorgesehen, bspw. ein 2K-Expansionsharz, z. B. auf Polyurethan-Basis.

In anderen Worten wird unter einer zunächst fließfähigen Füllsubstanz im Kontext der vorliegenden Erfindung z. B. ein Material verstanden, das bspw. aus mehreren Komponenten durch Vermischung gebildet und anschließend für eine gewisse Zeitspanne derart flüssig oder zumindest fließfähig ist, dass es Hohlräume, Zwischenräume oder Risse ausfüllen kann. Während des Ausfüllens der Hohlräume expandiert die zunächst fließfähige Füllsubstanz, nimmt also in ihrem Volumen zu. Beispielweise kann die Volumenzunahme mindestens 150 %, bevorzugt 200 %, 250 % oder 300 %, betragen (Obergrenzen können bspw. bei 1000 % oder 800 % liegen), wobei 100 % ein Volumen der Füllsubstanz vor der Expansion bezeichnet. Nach einer gewissen Zeitdauer härtet die Füllsubstanz, weist also eine mechanische Festigkeit bspw. gegenüber einer Handkraft eines Monteurs auf. Mittels der zunächst fließfähigen Füllsubstanz wird die Leitungsdurchführung, nämlich ihr Stützkörper, zumindest nach einer gewissen Aushärtezeit zuverlässig in der Durchlassöffnung des Wand- oder Bodenelements gehalten.

Der Stützkörper ist hierbei bspw. drehsymmetrisch. In der in der Durchlassöffnung eingesetzten Position kann die Mittenachse des Stützkörpers bspw. mit einer Längsachse der Durchlassöffnung zusammenfallen, um welche Längsachse z. B. die Laibung der Durchlassöffnung dreh- oder bevorzugt rotationssymmetrisch ist. Angaben wie "axial", "radial" und "umlaufend", sowie die zugehörigen Richtungen ("Axialrichtung" etc.), beziehen sich ohne gegenteilige Angabe auf die Mittenachse des Stützkörpers, insbesondere von deren in der Durchlassöffnung angeordneten Abschnitt. "Innen" und "außen" beziehen sich ohne ausdrücklich gegenteilige Angabe auf die Radialrichtung, eine Innen- oder Innenwandfläche ist also bspw. der Mittenachse des Stützkörpers und/oder der Längsachse der Durchlassöffnung zugewandt, eine Außen- oder Außenwandfläche hingegen abgewandt.

Wie nachstehend im Einzelnen diskutiert, ist der Stützkörper der Leitungsdurchführung in besonderer Weise ausgestaltet, um zwei Kammern mit jeweils vglw. kleinem Volumen zu bilden. Bevorzugt ist hierbei ein Material des Stützkörpers (der im Zuge der Montage in die Durchlassöffnung eingeschoben wird), also ein Stützkörpermaterial, ein geschäumtes Kunststoffmaterial. Das geschäumte Kunststoffmaterial ist in bevorzugter Ausgestaltung Polypropylen, bevorzugt expandiertes Polypropylen. Im Allgemeinen wäre aber bspw. auch expandiertes Polystyrol denkbar. Das geschäumte Kunststoffmaterial kann einen guten Kompromiss zwischen thermischer Isolation einerseits und hinreichend Stabilität beim Vergießen andererseits bieten. Zudem kann mit dem geschäumten Kunststoffmaterial, bspw. Polypropylen, ein Stützkörper mit einer zumindest abschnittsweise vglw. dicken Wandstärke gebildet werden. Gegenüber z. B. spitzgegossenen Komponenten können mit dem geschäumten Kunststoffmaterial bspw. auch vglw. deutliche Wandstärkeübergänge realisiert werden. Das geschäumte Kunststoffmaterial füllt nämlich eine zur Herstellung des Stützkörpers verwendete Form durch Expansion, sodass auch im Spritzguss nur bspw. mittels Schiebern zu realisierende Bereiche dickerer Wandstärke einfach durch die Volumenexpansion des geschäumten Kunststoffmaterials gebildet werden können.

Generell kann das geschäumte Kunststoffmaterial bspw. eine Rohdichte (auch geometrische Dichte bzw. Raumgewicht genannt) von höchstens 300 kg/m³, 200 kg/m³, 150 kg/m³ bzw. 100 kg/m³ haben, mit möglichen (davon unabhängigen) Untergrenzen bei z. B. mindestens 15 kg/m³, 20 kg/m³ bzw. 25 kg/m³. Hierdurch kann das geschäumte Kunststoffmaterial einerseits eine ausreichende mechanische Festigkeit zum Stützen bzw. Halten der Leitungen aufweisen, andererseits jedoch ein Gesamtgewicht des hieraus gebildeten Stützkörpers begrenzt werden.

Bevorzugt weist das Stützkörpermaterial eine Wärmeleitfähigkeit von höchstens 0,050 W/mK, 0,040 W/mK oder 0,030 W/mK, auf. Das geschäumte Kunststoffmaterial umschließt bspw. bläschenförmig darin eingeschlossene Luft oder ein anderes Gas matrixartig, sodass sich insgesamt eine vglw. geringe Wärmeleitfähigkeit ergibt; die in dem hieraus gebildeten Stützkörper verlaufenden Leitungen werden von diesem also gegenüber der Durchlassöffnung thermisch isoliert. Dies kann einerseits zur Vermeidung einer Wärmeübertragung von der Leitung in das Wand- oder Bodenelement vorteilhaft sein, andererseits jedoch auch eine Wärmeleitung von einer Gebäudeaußenseite durch den Stützkörper hin zu einer Gebäudeinnenseite vorteilhaft begrenzen. Dies kann insbesondere im Falle der Verbindung zwischen einer gebäudeaußenseitig angeordneten Außeneinheit eines Wärmepumpensystems mit einem gebäudeinnenseitig gelegenen Heizungsraum von Vorteil sein.

In bevorzugter Ausgestaltung wird der Stützkörper gegen die Leitung abgedichtet, indem in die innere Kammer eine zunächst fließfähige Füllsubstanz eingebracht wird, die dann expandiert und in der inneren Kammer härtet. Die Leitung kann bspw. eine Leitung für ein Fluid sein, etwa für ein Kältemittel einer Wärmepumpe. Die Füllsubstanz kann sich hierbei direkt an eine Außenmantelfläche eines als Fluidleitung vorgesehenen Rohres anlegen; alternativ kann die Fluidleitung aber auch isoliert sein und kann sich die Füllsubstanz an die Isolierung anlegen. Ebenso kann die Leitung aber auch ein Strom- oder Datenkabel sein. Die Leitung kann auch als Leerrohr vorgesehen sein, bspw. zum nachträglichen Durchführen eines Strom- oder Datenkabels. Bevorzugt werden mehrere Leitungen hindurchverlegt und sind auch Kombinationen möglich (z. B. Fluidleitung bzw. -leitungen + Strom-/Datenkabel bzw. Leerrohr).

Im Falle einer thermisch isolierten Fluidleitung kann deren Außendurchmesser, wenn die Isolierung (z. B. Isolierhülse) als Teil der Leitung betrachtet wird, bspw. bei mindestens 2 cm. 3 cm bzw. 4 cm liegen, mögliche Obergrenzen z. B. bei höchstens 20 cm, 15 cm, 10 cm oder 8 cm. Im Falle elektrisch isolierter Leitungen ist deren Außendurchmesser im Vergleich dazu kleiner.

Unabhängig von diesen Details wird bei der Verwendung die Leitung durch die innere Kammer des Stützkörpers geführt und wird anschließend, durch das Einbringen der Füllsubstanz, ein zwischen einer Leitungsmantelfläche der Leitung und einer Innenwand des Stützkörpers verbleibender Hohlraum, bspw. in Form eines Ringspalts oder eines Kleeblatts (siehe nachfolgend), durch die expandierende Füllsubstanz verschlossen. Die expandierende Füllsubstanz für das Verschließen der inneren Kammer ist ihrer Art nach bevorzugt die gleiche wie für die äußere, alternativ können jedoch auch spezifische Füllsubstanzen, bspw. mit unterschiedlichen Material- und/oder Aushärteeigenschaften, für die jeweilige Kammer vorgesehen sein.

In bevorzugter Ausgestaltung weist, bei einer Durchlassöffnung mit einem Mindestdurchmesser von 10 cm in einem eingesetzten oder montierten Zustand der Leitungsdurchführung und nach dem Hindurchführen der Leitung durch den Stützkörper, die innere Kammer vor dem Befüllen mit der zunächst fließfähigen Füllsubstanz ein Füllvolumen von höchstens 500 cm³ und/oder die äußere Kammer vor dem Befüllen mit der zunächst fließfähigen Füllsubstanz ein Füllvolumen von höchstens 1000 cm³ auf. Vereinfacht zusammengefasst ist die Durchlassöffnung relativ groß, können aufgrund des voluminösen Stützkörpers die Füllvolumina aber dennoch vglw. klein gehalten werden.

Durch den Stützkörper kann das mit der Füllsubstanz zu befüllende Volumen der inneren Kammer begrenzt werden, bspw. auf höchstens 500 cm³, 400 cm³ oder 350 cm³ (mögliche Untergrenzen können bei 50 cm³ bzw. 100 cm³ liegen). Alternativ oder zusätzlich kann das zu befüllende Volumen der äußeren Kammer begrenzt werden, bspw. auf höchstens 1000 cm³, 800 cm³ oder 700 cm³ (mit möglichen Untergrenzen bei z. B. 100 cm³ oder 200 cm³). Die Durchlassöffnung kann hierbei, aber auch generell, einen Mindestdurchmesser von bspw. 10 cm haben, wobei mögliche Obergrenzen z. B. bei 25 cm bzw. 20 cm liegen können. Die Kammern können demnach bspw. mit dem Inhalt einer einzelnen, handelsüblich erhältlichen PU-Schaumdose, aufgefüllt und ausgeschäumt werden. Zudem kann durch die Begrenzung des zu befüllenden Volumens der inneren und äußeren Kammer eine rasche und gezielte Aushärtung der zunächst fließfähigen Füllsubstanz erreicht werden.

In bevorzugter Ausgestaltung ist in einem in der Durchlassöffnung eingebauten Zustand der Leitungsdurchführung, und jedenfalls nach dem Hindurchführen der Leitung durch den Stützkörper, die innere Kammer fluidisch von der äußeren Kammer getrennt. Mit anderen Worten sind die äußere Kammer und die innere Kammer, zumindest nach dem Einsetzen der Leitungsdurchführung in die Durchlassöffnung und dem Hindurchführen der Leitung, vollständig voneinander getrennt. Bspw. können im Allgemeinen in dem Stützkörper der Leitungsdurchführung auch Fluidverbindungen zwischen der äußeren und der inneren Kammer vorgesehen sein, welche erst durch die darin verlaufenden Leitungen verschlossen werden bzw. infolgedessen sind. Bevorzugt ist der Stützkörper jedoch dergestalt, dass bereits vor dem Hindurchführen der Leitungen (jedoch erst nach dem Einsetzen in die Durchlassöffnung) keine Fluidverbindungen zwischen der äußeren Kammer und der inneren Kammer vorgesehen sind. Dies ist bspw. hinsichtlich einer kontrollierten Formfüllung der äußeren bzw. inneren Kammer von Vorteil.

In bevorzugter Ausgestaltung ist der Stützkörper monolithisch aus einem bzw. dem Stützkörpermaterial hergestellt. Der Begriff "monolithisch" meint, generell und in Bezug auf den Stützkörper, unterbrechungsfrei durchgehend aus demselben Material, ohne Materialgrenze bzw. -grenzen dazwischen. Der monolithisch ausgestaltete Stützkörper kann bspw. hinsichtlich einer Montage vorteilhaft sein, da gegenüber einem mehrteiligen Stützkörper ein zusätzliches Zusammensetzen bzw. Fügen der Einzelteile des Stützkörpers vermieden wird. Insgesamt wird durch die monolithische Gestaltung des Stützkörpers auch dessen Bereitstellung selbst vereinfacht, weil lediglich ein Stützkörper gefertigt, verpackt, transportiert und montiert werden muss. Der monoltihische Stützkörper kann sich bspw. in axialer Richtung unterbrechungsfrei durchgehend zwischen seinem ersten und seinem zweiten axialen Endabschnitt erstrecken, s.u. im Detail.

In bevorzugter Ausgestaltung ist, in einem Schnitt orthogonal zur Mittenachse des Stützkörpers betrachtet, eine Stützkörperaußenkante zumindest abschnittsweise kreisförmig. An der Außenkontur können (zwischen den Kreisbogenabschnitten) bspw. Stege oder Stützen, welche sich radial nach außen erstrecken, vorgesehen sein, die einer Abstützung in der Durchlassöffnung vor dem Ausschäumen dienen. Alternativ, oder in axial versetzten Schnittebenen betrachtet, kann die Stützkörperaußenkante aber auch einen umlaufend geschlossenen Kreis bilden.

Eine Stützkörperinnenkante bzw. die Innenkontur des Stützkörpers weist demgegenüber bevorzugt eine Mehrzahl von Bogensegmenten auf, deren Mittenachsen zueinander versetzt sind. Die Bogensegmente können z. B. jeweils mit zumindest abschnittsweise konstantem Radius gebildet sein. Bspw. können sich durch den Stützkörper mehrere Rundlochbohrungen erstrecken, die jedoch axial gesehen zumindest abschnittsweise miteinander überlappen oder unmittelbar aneinander angrenzen, sodass z. B. eine einzige zusammenhängende innere Kammer gebildet ist. Im Falle einer Überlappung von bspw. drei Bohrungen ist die Stützkörperinnenkante (in dem Schnitt orthogonal zur Mittenachse betrachtet) kleeblattförmig, hat also die Form eines dreiblättrigen Kleeblatts. Ähnlich könnten auch vier oder mehr miteinander zumindest abschnittsweise in Kontakt stehende Bohrungen in den Stützkörper eingebracht sein und hierdurch die innere Kammer bilden.

Der Begriff "Bohrung" dient hierbei lediglich der Veranschaulichung; bevorzugt wird die innere Kammer des aus geschäumten Kunststoffmaterial gebildeten Stützkörpers durch ein entsprechend ausgestaltetes Gusswerkzeug bzw. eine Expansionsform gebildet. Gegenüber einer runden oder kreisförmigen Stützkörperinnenkante mit einem konstanten Radius, bspw. also einem Rohr mit konstanter Wandstärke, hat die Ausgestaltung mit der Mehrzahl von Bogensegmenten den Vorteil, dass die innere Kammer spezifisch zur Aufnahme von mehreren Leitungen ausgestaltet werden kann. Insgesamt ergibt sich hierdurch einerseits bereits bei der Durchführung der Leitung eine mechanische Abstützung derselben und andererseits ein vglw. kleiner zwischen den Leitungen verbleibender Hohlraum. In Verbindung mit dem bevorzugten Ausschäumen der inneren Kammer, kann hierdurch eine rasche und gerichtete Erstarrung der zunächst fließfähigen Füllsubstanz in der inneren Kammer erreicht werden. Zudem kann, durch das abschnittsweise Überlappen der Bohrungen, mit nur einer Injektionsvorrichtung die gesamte innere Kammer mit der zunächst fließfähigen Füllsubstanz gefüllt werden.

In bevorzugter Ausgestaltung umfasst die Leitungsdurchführung ein an einem ersten axialen Endabschnitt des Stützkörpers ausgebildetes Flanschelement und/oder ein an einem dem ersten axialen Endabschnitt entgegengesetzten zweiten axialen Endabschnitt des Stützkörpers ausgebildetes Dichtelement. Als Flanschelement und als Dichtelement werden hierbei radial nach außen gerichtete räumliche Körper verstanden, die in der Radialrichtung weiter nach außen als der Stützkörper reichen können. In anderen Worten stehen das Flanschelement und/oder das Dichtelement in radialer Richtung jeweils gegenüber dem Stützkörper hervor; in einem Schnitt orthogonal zur Mittenachse weisen sie z. B. jeweils einen größeren Außendurchmesser auf als der Stützkörper.

Unabhängig von diesen Details ist das Flansch- und/oder Dichtelement, wenn der Stützkörper in die Durchlassöffnung eingeschoben wird, bspw. bereits auf dem Stützkörper angeordnet. Das Flanschelement kann sich bspw. zu einer Seitenfläche des Wand- oder Bodenelements hin dichtend anlegen; das Dichtelement kann sich bspw. an die die Durchlassöffnung begrenzende Laibung dichtend anlegen. Generell können das Flansch- und das Dichtelement bspw. den Einbau der Leitungsdurchführung erleichtern, bspw. bereits aufgrund ihrer geometrischen Ausgestaltung gut handhabbar sein und gewisse Unebenheiten an der Seitenfläche oder Laibung ausgleichen.

Bevorzugt hat das Flanschelement eine runde Außenkontur, ist dessen Außenkante, in einem Schnitt orthogonal zur Mittenachse betrachtet, also rund, bevorzugt kreisrund. Alternativ kann das Flanschelement auch eine vier- oder mehreckige Außenkontur aufweisen, was bspw. hinsichtlich einer zur Verfügung stehenden Anbindfläche zur Verbindung des Flanschteils mit einer Außen- oder Innenfläche des Wand- oder Bodenelements vorteilhaft sein kann. Insgesamt ragt das Flanschelement jedoch um einen gewissen Abstand, bspw. mindestens 5 cm, 10 cm oder 15 cm, gegenüber der Außenkontur des Stützkörpers in der Radialrichtung hervor. Dies ermöglicht mit dem Flanschelement eine Abdichtung zu einer Außen- oder Innenfläche einer Gebäudewand hin, wie nachstehend im Einzelnen erläutert.

An einem dem ersten axialen Endabschnitt entgegengesetzten zweiten axialen Endabschnitt des Stützkörpers ist zudem das Dichtelement vorgesehen, welches ebenfalls um eine gewisse Strecke gegenüber dem Außendurchmesser des Stützkörpers (in radialer Richtung) hervorsteht. Bspw. beträgt dieser Überstand höchstens 6 cm, 5 cm, 4 cm, 3 cm, 2 cm, oder 1 cm; das Dichtelement weist gegenüber dem Flanschelement also einen kleineren Außendurchmesser auf. Das Dichtelement ist zum Einführen in die Durchlassöffnung vorgesehen (siehe nachfolgend im Detail), sein Außendurchmesser entspricht bevorzugt im Wesentlichen dem Innendurchmesser der Durchlassöffnung, kann also bspw. um höchstens 1 cm, 6 mm, 4 mm oder 2 mm größer oder kleiner sein als der Innendurchmesser der Durchlassöffnung (bspw. bei einer Durchflussöffnung mit einem Innendurchmesser von 10 cm - 25 cm).

Bevorzugt ist der Stützkörper in Form eines Rohrabschnitts gestaltet, wobei an dessen jeweils entgegengesetzten axialen Enden das Flanschelement und das Dichtelement vorgesehen sind. Wie eingangs bereits erläutert, weist der Stützabschnitt mindestens eine axiale Durchgangsbohrung auf, welche sich zwischen dem Flanschelement und dem Dichtelement erstreckt. In dem Flansch- und dem Dichtelement sind bevorzugt entsprechende Aussparungen vorgesehen (siehe nachfolgend), sodass insgesamt einfach eine Leitung durch die derart gebildete Leitungsdurchführung geführt werden kann.

Bevorzugt wird die Leitungsdurchführung solchermaßen in die Durchgangsöffnung eingesetzt,
- dass das Flanschelement axial aus der Durchlassöffnung hervorsteht und dichtend an einer Wand- oder Bodenfläche (also Seitenfläche des Wand- oder Bodenelements) des Gebäudes anliegt, und/oder
- dass das Dichtelement axial vollständig in der Durchlassöffnung angeordnet ist und dichtend an der Laibung der Durchlassöffnung anliegt.

Mit anderen Worten: die Leitungsdurchführung wird mit dem Dichtelement voraus in die Durchgangsöffnung eingeschoben und das Flanschelement mit seiner dem Dichtelement zugewandten Dichtfläche zu dem Wand- oder Bodenelement hin angedrückt, also zu dessen Seitenfläche. Dabei kann zwischen dem Flanschelement und der Seitenfläche ein zusätzliches Dichtelement angeordnet sein, bspw. ein Butylband oder eine Butyllage.

Die Erfinder haben festgestellt, dass durch die Anordnung eines Dichtelements in der Durchgangsöffnung und das Andrücken des Flanschelements bspw. an der Gebäudewandaußenseite auf einfache Weise eine Leitungsdurchführung hergestellt werden kann, die für unterschiedliche Wandstärken und Anwendungsfälle ohne etwaige Anpassungen anwendbar ist. In anderen Worten muss die Leitungsdurchführung nicht aufwendig an z. B. die Wandstärke angepasst werden, sondern kommt das Dichtelement innerhalb der Durchlassöffnung zu liegen (in wanddickenabhängig leicht variierenden Abstand zur dem Flanschelement entgegengesetzten Seitenfläche).

Wie erwähnt, wird die Leitungsdurchführung derart in die Durchgangsöffnung eingesetzt, dass nach dem Einsetzen eine äußere und eine innere Kammer mit jeweils vglw. kleinem Füllvolumen gebildet sind. Diese kann oder können zusätzlich durch das Flanschelement zur Seitenfläche abgedichtet werden. Generell kann das Flanschelement eine Anbindung an eine Abdichtung des Wand- oder Bodenelements schaffen, bspw. an eine Dichtfolie oder einen Bitumendickanstrich. Alternativ wird die Leitungsdurchführung jedoch oberirdisch in einer Außenwand eines Gebäudes eingesetzt, bspw. zur Durchführung der Leitungen der Außeneinheit einer Wärmepumpe nach innen (siehe zuvor). Dabei kann durch die Ausgestaltung mit dem Flansch- und dem Dichtelement eine hinreichend dichte Verbindung zwischen der Leitungsdurchführung und der Durchlassöffnung gebildet werden, sodass keine weiteren Abdichtmaßnahmen erforderlich sind.

Zudem kann über das Flanschelement ein bei der Herstellung der Durchlassöffnung (bspw. als Kernlochbohrung) entstandener Ausriss oder Ausbruch im Mauerwerk verdeckt und insgesamt ein ansprechender visueller Gesamteindruck (ohne baulichen Mehraufwand wie erneutes Verputzen etc.) erreicht werden, nämlich deckt der Flansch etwaig ausgebrochene Abschnitte zuverlässig ab, was insbesondere bei der Nachrüstung von Bestandsgebäuden mit einer Wärmepumpe von Vorteil sein kann.

Das Flanschelement und/oder das Dichtelement kann monolithisch mit dem Stützkörper gebildet sein; es kann bspw. auch nur das Flanschelement monolithisch mit dem Stützkörper gebildet und das Dichtelement an diesem angesetzt sein (oder andersherum). Gemäß einer bevorzugten Ausgestaltung ist das Flanschelement und/oder das Dichtelement jedoch aus einem Elastomermaterial vorgesehen. Der Begriff "Elastomermaterial" meint im Rahmen dieser Offenbarung ganz allgemein einen Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen.

Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer. Das Vorsehen des Flanschelements und/oder des Dichtelements aus dem Elastomermaterial erlaubt einerseits eine Dichte in der Anlage an der Wand- oder Bodenfläche durch das Flanschelement und andererseits ein Abdichten gegenüber der Mantelfläche oder Laibung der Durchlassöffnung durch das Dichtelement. Hierdurch können zusätzliche Dichtelemente vermieden oder gänzlich eingespart werden.

Bei einer alternativ bevorzugten Ausführungsform ist Flanschelement und/oder das Dichtelement starr ausgebildet, sind diese also aus einem starren Material geformt. Dabei kann es sich z. B. um einen Hartkunststoff handeln, etwa mit einer Shore-Härte (D) von mindestens 40 Shore, weiter und besonders bevorzugt mindestens 45 Shore bzw. mindestens 50 Shore; mögliche Obergrenzen können bspw. bei höchstens 100 Shore, weiter und besonders bevorzugt höchstens 90 Shore bzw. höchstens 80 Shore liegen (jeweils D).

In bevorzugter Ausgestaltung ist an dem Flanschelement und/oder dem Dichtelement mindestens eine Dichtmanschette zum Hindurchführen der Leitung ausgebildet, welche nach dem Hindurchführen der Leitung dichtend an einer Leitungsmantelfläche anliegt. Die Dichtmanschette umgreift die Mantelfläche der Leitung nach deren Hindurchführen über einen gewissen Abschnitt, dichtet hierdurch die Leitungsmantelfläche gegen die Leitungsdurchführung ab. In Verbindung mit der vorgenannten Eigenelastizität (im Falle des Elastomermaterials) kann, sofern das Flanschelement und/oder das Dichtelement aus dem Elastomermaterial vorgesehen ist bzw. sind, die Dichtmanschette zum Hindurchführen der Leitung etwas aufgedehnt werden, wodurch ein gewisser Anpressdruck auf der Mantelfläche der Leitung erzeugt und die Abdichtung weiter verbessert wird.

In bevorzugter Ausgestaltung wird die an dem Flanschelement ausgebildete Dichtmanschette bevorzugt vor dem Einfüllen der zunächst fließfähigen Füllsubstanz in die innere Kammer mittels eines kraftschlüssig wirkenden Klemmelements auf die Leitungsmantelfläche geklemmt, und/oder weist die Dichtmanschette des Dichtelements einen mit einem zunehmendem Abstand entlang der Mittenachse X gemessen von dem Stützelement abnehmenden Innendurchmesser auf. Bevorzugt wird die am Flanschelement vorgesehene Dichtmanschette also mit einem zusätzlichen Spannelement, bspw. einem Kabelbinder oder einem Spannband, auf der Mantelfläche der Leitungsdichtung befestigt.

Demgegenüber ist die Dichtmanschette des Dichtelements bevorzugt konisch ausgestaltet, sodass diese beim Hindurchführen der Leitung etwas aufgeweitet und entsprechend an die Außenmantelfläche der Leitung angepresst wird. Auf diese Weise wird eine beidseitige Abdichtung der inneren Kammer erreicht, wobei nur auf der Seite des Flanschelements eine Zugänglichkeit für die Montage des Kabelbinders bzw. des Spannbands erforderlich ist. Insgesamt wird jedoch eine bspw. gegenüber Luftdruckschwankungen dichte Leitungsdurchführung erreicht, die dennoch schnell und einfach zu montieren ist.

In bevorzugter Ausgestaltung sind das Flanschelement und/oder das Dichtelement gegen ein Verschieben entlang der Mittenachse des Stützkörpers formschlüssig an diesem gesichert. Bspw. ist hierfür an dem Flanschelement und/oder dem Dichtelement ein radial nach innen gerichteter Formschlussabschnitt vorgesehen, welcher zumindest abschnittsweise komplementär zu mindestens einem radial nach außen gerichteten Formschlussabschnitt des Stützkörpers ist. Der Stützkörper weist also zumindest im Bereich seiner axialen Endabschnitte (siehe zuvor) bspw. radial nach außen gerichtete Formschlussabschnitte auf, in die entsprechend ausgestaltete und bspw. radial nach innen gerichtete Formschlussabschnitte des Flanschelements und/oder des Dichtelements eingreifen.

Als Formschlusselement wird hierbei ein in Bezug auf die Axialrichtung des Stützkörpers gebildeter Hinterschnitt verstanden, bspw. eine entlang der Außenmantelfläche des Stützkörpers umlaufende Nut mit entsprechenden Eingreifelementen zum Eingriff mit dem Flanschelement und/oder dem Dichtelement. Dem Fachmann sind unterschiedliche Systeme zur axialen Sicherung des Flanschelements und des Dichtelements bekannt, bspw. ineinander eingreifende Wellenberge und -täler eines Ripp- oder Wellrohres, konventionelle Außen- und Innengewinde oder bspw. auch Bajonettverschlüsse. Unabhängig von der genauen Ausgestaltung der Formschlussabschnitte werden das Flanschelement und das Dichtelement von diesen zumindest gegen ein axiales Abrutschen gesichert, wobei bevorzugt (vor dem Einbringen der zunächst fließfähigen Füllsubstanz in die äußere Kammer) eine gewisse Verdrehbarkeit des Flanschelements und des Dichtelements um die Mittenachse zur Erleichterung der Durchführung der Leitung vorgesehen sein soll. Bevorzugt wird diese Verdrehbarkeit nach dem Expandieren der Füllsubstanz in der äußeren Kammer gehemmt, sind diese also fest mit dem Stützkörper verbunden und zuverlässig in der Durchgangsöffnung fixiert.

In bevorzugter Ausgestaltung wird bzw. werden das Flanschelement und/oder das Dichtelement unter Ausnutzung einer Eigenelastizität des Elastomermaterials vor dem Einbau in die Durchlassöffnung zumindest im Bereich ihres Formschlussabschnitts elastisch aufgeweitet und auf den mindestens einen jeweiligen Formschlussabschnitt des Stützkörpers aufgezogen. Insbesondere im Falle einer gewissen Eigenelastizität des Flansch- oder Dichtelements (siehe zuvor) kann dieses also einfach und schnell, bspw. ohne weitere Hilfsmittel und direkt in der Fertigung oder auch auf der Baustelle, auf das Stützelement aufgezogen werden. Bspw. können das Flansch und/oder das Dichtelement auch als von dem Stützkörper getrennt vertriebenes Produkt bereitgestellt werden, sodass auf der Baustelle ein zu dem jeweils gegebenen Anwendungsfall passende Flansch- und/oder Dichtelemente ausgewählt und auf den Stützkörper aufgezogen werden können. Dies kann bspw. bei einer variierenden Anzahl von zu verlegenden Leitungen vorteilhaft sein oder der Durchmesseranpassung an verschiedene Durchlassöffnungen dienen. Bevorzugt erfolgt die Lieferung der Leitungsdurchführung jedoch bereits als vormontiertes Set, also mit bereits auf den Stützkörper aufgezogenem und elastisch ausgebildetem Flansch- und Dichtelement, wodurch bspw. ein zusätzlicher Zusammenbau der Komponenten der Leitungsdurchführung auf der Baustelle (z. B. unter ungünstigen Bedingungen, siehe zuvor) vermieden werden kann.

In bevorzugter Ausgestaltung ist in dem Formschlussabschnitt des Flanschelements und dem Formschlussabschnitt des Stützkörpers eine Durchgangsbohrung ausgebildet, durch die ein erstes Injektionselement vor dem Befüllen der äußeren Kammer in diese eingeführt wird, um anschließend die zunächst fließfähige Füllsubstanz in die äußere Kammer einzubringen. In bevorzugter Ausgestaltung wird zudem ein zweites Injektionselement vor dem Befüllen der inneren Kammer durch das Flanschelement in diese eingeführt, um anschließend die zunächst fließfähige Füllsubstanz in die innere Kammer einzubringen. Durch das Vorsehen getrennter Injektionselemente, welche voneinander verschieden und räumlich getrennt sind, können die äußere und innere Kammer räumlich und zeitlich getrennt voneinander befüllt werden, was bspw. hinsichtlich einer baustellenspezifischen Anpassung der Montagereihenfolge von Vorteil sein kann.

Nämlich kann die Leitung zunächst durch die innere Kammer geführt und deren verbleibendes Volumen anschließend mit der Füllsubstanz aufgefüllt werden, wodurch eine kompakte Einheit aus Leitungsdurchführung und Leitung erhalten wird. Diese kompakte Einheit kann anschließend in die Durchlassöffnung eingesetzt und die infolgedessen gebildete äußere Kammer mit der verbleibenden Füllsubstanz verschlossen werden. Jedoch ist es aufgrund der Verwendung zweier getrennter Injektionselemente und die Ausgestaltung der beiden Kammern als separate Kammern auch möglich, diese Reihenfolge spezifisch anzupassen und bspw. zuerst den Stützkörper in der Durchlassöffnung zu fixieren und anschließend die Leitungen durch diesen hindurchzuführen.

Wie bereits erläutert, kann die fließfähige Füllsubstanz für die Befüllung der äußeren Kammer dabei von der fließfähigen Füllsubstanz für die Befüllung der inneren Kammer verschieden sein, bevorzugt wird für beide Kammern jedoch die gleiche verwendet.

Die Erfindung betrifft auch eine Leitungsdurchführungsanordnung mit einer vorliegend offenbarten Leitungsdurchführung, die in eine Durchlassöffnung in einem Wand- oder Bodenelement eines Gebäudes eingebaut ist. Bezüglich weiterer möglicher Details wird auf die vorliegende Offenbarung verwiesen, alle auf ein Verfahren bzw. eine Verwendung gerichteten Schritte sind auch dahingehend zu lesen, dass Leitungsdurchführung entsprechend montiert bzw. die Leitung entsprechend hindurchgeführt und abgedichtet ist.

Der weitere Erfindungsgegenstand lässt sich auch in Form der folgenden Aspekte zusammenfassen:
1. Verwendung einer Leitungsdurchführung (1001),
   welche einen Stützkörper (1002) umfasst, der eine innere Kammer (103) bildet, durch welche eine Leitung (104) entlang einer Mittenachse (X) des Stützkörpers (1002) hindurchführbar ist,
   zum Einbau in eine Durchlassöffnung (105) in einem Wand- oder Bodenelement (106, 107) eines Gebäudes,
   - wobei die Leitungsdurchführung (1001) solchermaßen in die Durchlassöffnung (105) eingesetzt wird, dass zwischen dem Stützkörper (1002) und einer Laibung (105.1) der Durchlassöffnung (105) eine äußere Kammer (108) gebildet wird,
   - wobei der Stützkörper (1002) in der Durchlassöffnung (105) befestigt wird, indem in die äußere Kammer (108) eine zunächst fließfähige Füllsubstanz eingebracht wird, die dann expandiert und in der Durchlassöffnung (105) härtet,
   - wobei die Leitung (104) durch den Stützkörper (1002) geführt und der Stützkörper (1002) gegen die Leitung (104) abgedichtet wird.
2. Verwendung nach Aspekt 1, wobei ein Stützkörpermaterial des Stützkörpers (1002) ein geschäumtes Kunststoffmaterial ist.
3. Verwendung nach Aspekt 1 oder 2, wobei der Stützkörper (1002) gegen die Leitung (104) abgedichtet wird, indem in die innere Kammer (103) eine zunächst fließfähige Füllsubstanz eingebracht wird, die dann expandiert und in der inneren Kammer (103) härtet.
4. Verwendung nach einem der Aspekte 1 bis 3, wobei bei einer Durchlassöffnung (1002) mit einem Mindestdurchmesser von 10 cm in einem eingesetzten Zustand der Leitungsdurchführung (1001) und nach dem Hindurchführen der Leitung (104) durch den Stützkörper (1002), die innere Kammer (103) vor dem Befüllen mit der zunächst fließfähigen Füllsubstanz ein Füllvolumen von höchstens 500 cm³ und/oder die äußere Kammer (108) vor dem Befüllen mit der zunächst fließfähigen Füllsubstanz ein Füllvolumen von höchstens 1000 cm³ aufweist.
5. Verwendung nach einem der Aspekte 1 bis 4, wobei, in einem in der Durchlassöffnung (1002) eingesetzten Zustand der Leitungsdurchführung (1001) und jedenfalls nach dem Hindurchführen der Leitung (104) durch den Stützkörper (1002) die innere Kammer (103) fluidisch von der äußeren Kammer (108) getrennt ist.
6. Verwendung nach einem der Aspekte 1 bis 5, wobei der Stützkörper (1002) monolithisch aus einem/dem Stützkörpermaterial hergestellt ist.
7. Verwendung nach einem der Aspekte 1 bis 6, wobei, in einem Schnitt orthogonal zur Mittenachse (X) des Stützkörpers (1002) betrachtet, eine Stützkörperaußenkante (102.3) zumindest abschnittsweise kreisförmig ist und eine Stützkörperinnenkante (102.4) aus einer Mehrzahl von Bogensegmenten gebildet ist, deren Mittenachsen zueinander versetzt sind.
8. Verwendung nach einem der Aspekte 1 bis 7, wobei die Leitungsdurchführung (1001) ein an einem ersten axialen Endabschnitt des Stützkörpers (1002) ausgebildetes Flanschelement (109) und ein an einem dem ersten axialen Endabschnitt entgegengesetzten zweiten axialen Endabschnitt des Stützkörpers (1002) ausgebildetes Dichtelement (110) umfasst.
9. Verwendung nach Aspekt 8, wobei die Leitungsdurchführung (1001) zudem solchermaßen in die Durchlassöffnung (105) eingesetzt wird,
   - dass das Flanschelement (109) axial aus der Durchlassöffnung (105) hervorsteht und dichtend an einer Wand- oder Bodenfläche des Gebäudes anliegt, und/oder
   - dass das Dichtelement (110) axial vollständig in der Durchlassöffnung (105) angeordnet ist und dichtend an der Laibung (105.1) der Durchlassöffnung (105) anliegt.
10. Verwendung nach Aspekt 8 oder 9, wobei das Flanschelement (109) und/oder das Dichtelement (110) aus einem Elastomermaterial vorgesehen ist.
11. Verwendung nach einem der Aspekte 8 bis 10, wobei an dem Flanschelement (109) und/oder dem Dichtelement (110) eine Dichtmanschette (109.2, 110.2) zum Hindurchführen der Leitung (104) ausgebildet ist, welche nach dem Hindurchführen der Leitung (104) dichtend an einer Leitungsmantelfläche anliegt.
12. Verwendung nach Aspekt 11, wobei die an dem Flanschelement (109) ausgebildete Dichtmanschette (109.2)(109.2), bevorzugt vor dem Einfüllen der zunächst fließfähigen Füllsubstanz in die innere Kammer (103), mittels eines Klemmelements auf die Leitungsmantelfläche geklemmt wird und/oder wobei die Dichtmanschette (110.2) des Dichtelements (110) einen mit einem zunehmendem Abstand von dem Stützelement (1002) abnehmenden Innendurchmesser aufweist.
13. Verwendung nach einem der Aspekte 8 bis 12, wobei das Flanschelement (109) und/oder das Dichtelement (110) gegen ein Verschieben entlang der Mittenachse (X) des Stützkörpers (1002) formschlüssig an diesem gesichert sind.
14. Verwendung nach Aspekt 13, bevorzugt in Verbindung mit Aspekt 10, wobei das Flanschelement (109) und/oder das Dichtelement (110) vor dem Einbau in die Durchlassöffnung (105) zumindest im Bereich ihres jeweiligen Formschlussabschnitts (109.1, 110.1) elastisch aufgeweitet und auf den mindestens einen Formschlussabschnitt (102.1, 102.2) des Stützkörpers (1002) aufgezogen werden.
15. Verwendung nach Aspekt 13 oder 14, wobei in dem Formschlussabschnitt (109.1) des Flanschelements (109) und dem Formschlussabschnitt (102.1, 102.2) des Stützkörpers (1002) eine Durchgangsbohrung ausgebildet ist, durch die ein erstes Injektionselement (11) vor dem Befüllen der äußeren Kammer (108) in diese eingeführt wird, um anschließend die zunächst fließfähige Füllsubstanz in die äußere Kammer (108) einzubringen.
16. Verwendung nach einem der Aspekte 8 bis 15, wobei ein zweites Injektionselement (112) zum Befüllen der inneren Kammer (103) durch das Flanschelement (109) in diese eingeführt ist oder wird, um die zunächst fließfähige Füllsubstanz in die innere Kammer (103) einzubringen.
17. Leitungsdurchführungsanordnung, mit
   einer Leitungsdurchführung (1001),
      welche einen Stützkörper (1002) umfasst, der eine innere Kammer (103) bildet, durch welche eine Leitung (104) entlang einer Mittenachse (X) des Stützkörpers (1002) hindurchführbar ist, und
   einem Wand- oder Bodenelement (106, 107) eines Gebäudes,
   wobei die Leitungsdurchführung (1001) in eine Durchlassöffnung (105) in dem Wand- oder Bodenelement (106, 107) eingebaut ist,
   - wobei die Leitungsdurchführung (1001) solchermaßen in die Durchlassöffnung (105) eingesetzt ist, dass zwischen dem Stützkörper (1002) und einer Laibung (105.1) der Durchlassöffnung (105) eine äußere Kammer (108) gebildet ist,
   - wobei der Stützkörper (1002) in der Durchlassöffnung (105) befestigt ist, indem in die äußere Kammer (108) eine Füllsubstanz eingebracht ist,
   wobei die Leitung (104) durch den Stützkörper (1002) geführt und der Stützkörper (1002) gegen die Leitung (104) abgedichtet ist.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und weiterhin nicht im Einzelnen zwischen den unterschiedlichen Anspruchskategorien unterschieden wird.

Im Einzelnen zeigt
- Figur 1a: eine Leitungsdurchführung mit Durchführungshülse und Manschette in einer Durchlassöffnung in einem Wandelement;
- Figur 1b: die Leitungsdurchführung gemäß Figur 1a mit einer darin verlegten Leitung;
- Figur 2: ein Monoblockrohr zur Illustration eines möglichen Leitungstyps;
- Figur 3a: eine Leitungsdurchführung mit eingesetzten Endstücken;
- Figur 3b: die Leitungsdurchführung gemäß Figur 3a mit hindurchgeführten Einzel-Leitungen und ausgeschäumtem Innenraum
- Figur 4: ein Elastomerteil einer Leitungsdurchführung, welches Manschette und Flanschteil bildet;
- Figur 5a: eine Leitungsdurchführung mit einer hindurchgeführten Einzel-Leitung und einer in die Durchführungshülse eingesetzten Pressdichtung;
- Figur 5b: eine abgewandelte Konfiguration des Aufbaus gemäß Figur 5a;
- Figur 6a: eine Leitungsdurchführung mit einer hindurchgeführten Einzel-Leitung und einem in die Durchführungshülse eingesetzten Systemdeckel;
- Figur 6b: eine abgewandelte Konfiguration zu Figur 6a;
- Figur 7: eine Leitungsdurchführung mit Elastomerteil und Stützhülse;
- Figur 8: die Leitungsdurchführung gemäß Figur 7 im montierten Zustand;
- Figur 9: eine Leitungsdurchführung in einem Schnitt;
- Figur 10: eine geschnittene Schrägansicht der Leitungsdurchführung gemäß Figur 9;
- Figur 11: eine weitere Ansicht der Leitungsdurchführung;
- Figur 12: eine Schnittansicht durch eine Leitungsdurchführung entlang einer Mittenachse eines Stützkörpers;
- Figur 13a: eine Draufsicht auf das Flanschelement;
- Figur 13b: einen Schnitt durch das Stützelement entlang der Schnittlinie A - A' aus Figur 12;
- Figur 13c: eine Draufsicht auf das Dichtelement; und
- Figur 14: ein Beispiel einer möglichen alternativen Ausführungsform der Leitungsdurchführung;
- Figur 15: eine weitere Ausführungsform einer Leitungsdurchführung;
- Figur 16: eine weitere Ansicht der Leitungsdurchführung gemäß Figur 15.

### Bevorzugte Ausführung der Erfindung

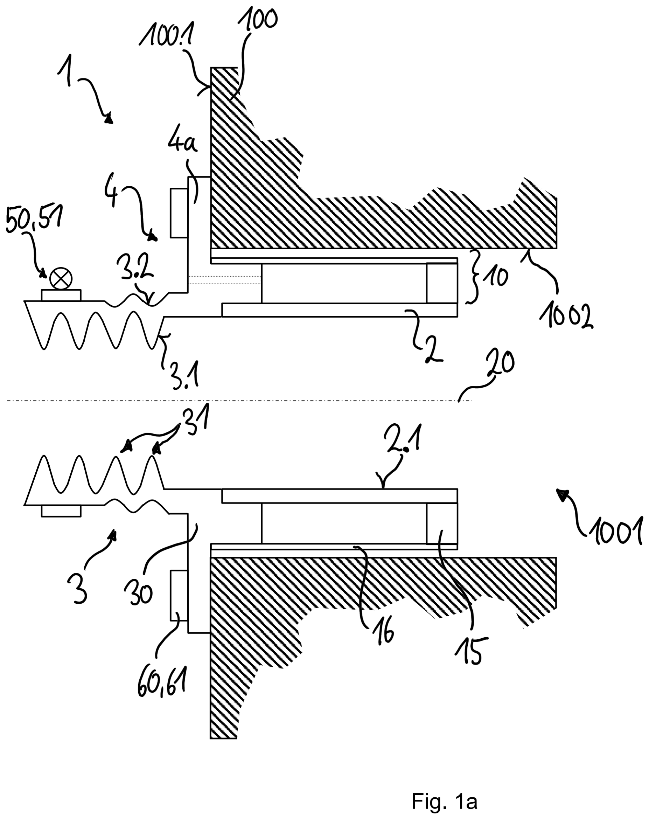

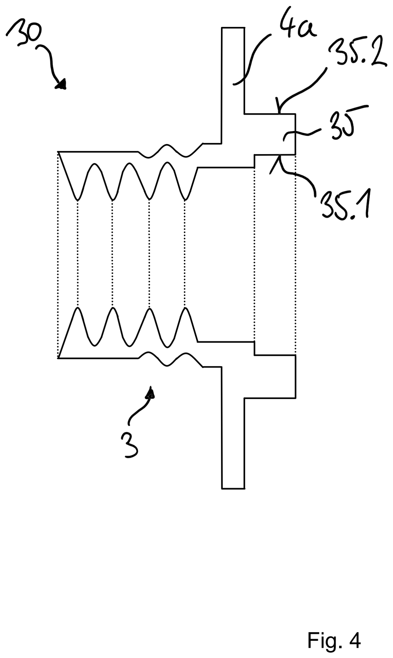

**Figur 1a** zeigt eine Leitungsdurchführung 1, die eine Durchführungshülse 2 und eine Manschette 3 aufweist. Auf einer Axialposition zwischen der Durchführungshülse 2 und der Manschette 3 ist ein Flanschteil 4 vorgesehen, welches eine Lage 4a aus einem Elastomermaterial aufweist. Die Lage 4a des Flanschteils 4 und die Manschette 3 sind monolithisch aus demselben Elastomermaterial gebildet, vgl. auch Figur 4 im Detail.

Im vorliegenden Beispiel ist die Durchführungshülse 2 ein Hartkunststoff-Rohr, welches um eine Mittenachse 20 rotationssymmetrisch ist. Auf die Durchführungshülse 2 ist ein Elastomerteil 30 aufgeklebt, welches unter anderem die Manschette 3 bildet. An einem axial entgegengesetzten Ende der Durchführungshülse2 ist ein ringförmiges Endstück 15 aufgesetzt, vorliegend verklebt, welches gemeinsam mit dem Elastomerteil 30 eine Montagehülse 16 trägt.

Diese ist in Form eines vglw. dünnwandigen und flexiblen Elastomermantels vorgesehen. Radial zwischen der Durchführungshülse 2 und der Montagehülse 16 ist ein Füllvolumen 11 ausgebildet, welches im vorliegenden Beispiel einen radial zwischen der Durchführungshülse 2 und einer Laibung 1002 ausgebildeten Ringraum 10 weitgehend ausfüllt. Über einen nur schematisch angedeuteten Injektionskanal 12 wird eine Füllsubstanz (nicht dargestellt) in das Füllvolumen 11 eingebracht. Die Füllsubstanz, z. B. 2K-Harz (bspw. PU-Schaum), ist zunächst fließfähig, nimmt dann an Volumen zu und härtet. Über hier nicht dargestellte Öffnungen in der Montagehülse 16 kann sie zur Laibung 1002 hin austreten, was eine Fixierung und Abdichtung schafft.

Vorliegend ist ein Wandelement 100 dargestellt, in dieses wurde eine von der Laibung 1002 begrenzte Durchlassöffnung 1001 eingebracht, bspw. als Kernbohrung. Mit dem Einschäumen der Durchführungshülse 2 kann einerseits eine definierte Oberfläche geschaffen werden, nämlich an der Innenwandfläche 2.1 der Durchführungshülse 2. Andererseits wird mit dem Einschäumen der Durchführungshülse 2 auch die einstückig damit vorgesehene Manschette 3 befestigt. Die Manschette 3 wiederum dient der Befestigung bzw. Abdichtung zur Leitung, ihre Innenwandfläche 3.1 ist mit mehreren axial aufeinanderfolgenden Erhebungen 31 geformt.

Die radial entgegengesetzte Außenwandfläche 3.2 ist abschnittsweise entsprechend gewölbt und in einem endseitigen Axialabschnitt glatt ausgebildet. Dort ist ein Spannmittel 50 zum Andrücken der Manschette 3 angeordnet, in diesem Beispiel eine Spannschelle 51. Zur Befestigung und auch Abdichtung zu einer Seitenfläche 100.1 des Wandelements 100 hin wird der Flansch 4 zusätzlich angedrückt. Hierzu ist ein Andrückelement 60 vorgesehen, das im vorliegenden Beispiel als umlaufender Spannring 61 ausgebildet ist. Der Spannring 61 wird mit hier nicht dargestellten Schrauben am Wandelement 100 verschraubt.

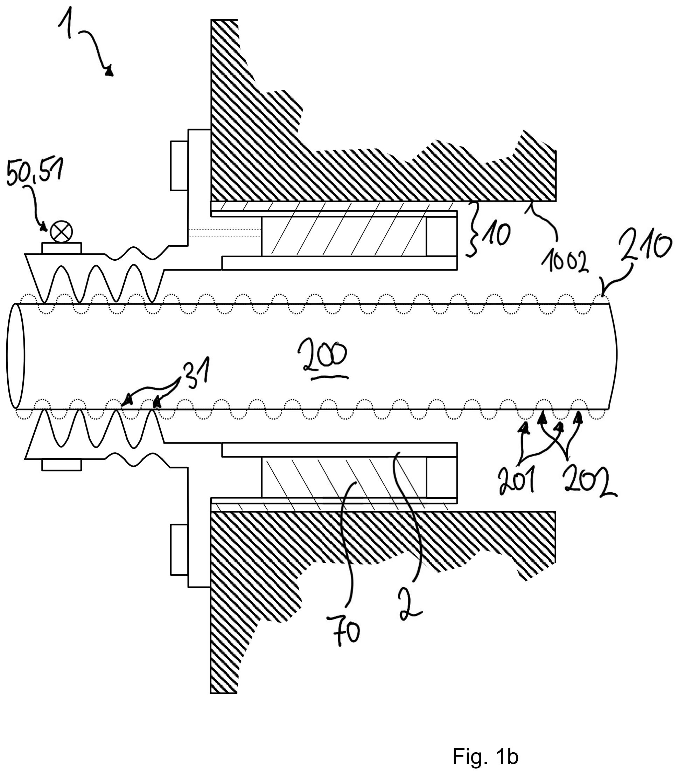

**Figur 1b** zeigt die Leitungsdurchführung 1 gemäß Figur 1a, und illustriert weitere Details der Montage. Die Füllsubstanz 70 füllt das Füllvolumen 11 bzw. den gesamten Ringraum 10 zur Laibung 1002 hin aus. Durch die Durchführungshülse 2 ist eine Leitung 200 verlegt. Diese hat vorliegend eine mit axial aufeinanderfolgenden 201 und Vertiefungen 202 vorgesehene Außenwandfläche 210. Dabei kommen die Erhebungen 31 der Manschette 3 in Vertiefungen 202 der Außenwandfläche 210 zu liegen. Durch Anziehen des Spannmittels 50 kann die Manschette 3 weiter angedrückt, kann also eine Abdichtung und Auszugssicherung geschaffen werden.

Die Figuren 1a,b können hierbei einen Montageablauf wiedergeben, es kann zunächst die Leitungsdurchführung 1 in der Durchlassöffnung 1001 montiert werden, bevor die Leitung 200 hindurchgeführt wird. Alternativ lässt sich die Leitungsdurchführung 1 jedoch auch zuvor auf die Leitung 200 aufziehen und kann diese dann gemeinsam mit der Leitungsdurchführung 1 in der Durchlassöffnung 1001 platziert werden.

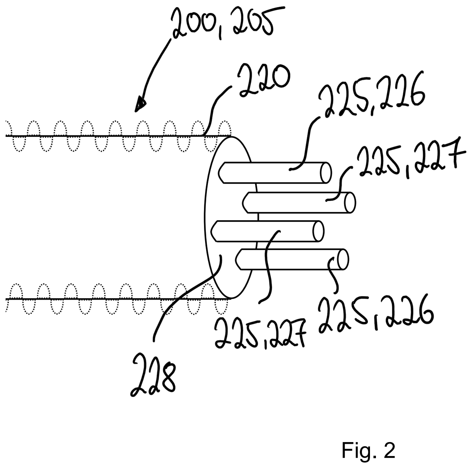

**Figur 2** zeigt eine Leitung 200 und illustriert weitere Details. Bei diesem Beispiel handelt es sich um ein Monoblockrohr 205, bei dem in einem Schutzrohr 220 eine Einzel-Leitung 225 bzw. Einzel-Leitungen 225 zusammengefasst und mit einer Isolierung 228 zum Schutzrohr 220 hin isoliert sind. Vorliegend handelt es sich bei den Einzel-Leitungen 225 um zwei Fluidleitungen 226, nämlich für Vor- und Rücklauf einer Wärmepumpe, sowie zwei Leerrohre 227 zur optionalen Kabelverlegung (Elektro oder Daten).

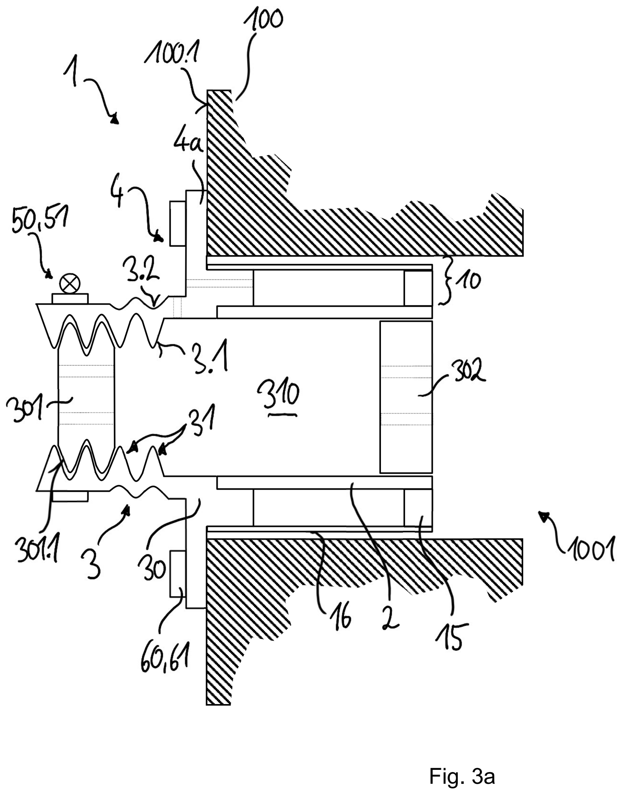

**Figur 3a** zeigt eine Leitungsdurchführung 1, die analog der Schilderung zu den Figuren 1a,b in die Durchlassöffnung 1001 gesetzt und mit der Füllsubstanz 70 sowie dem Andrückelement 60 befestigt wird. Generell bezeichnen im Rahmen der vorliegenden Offenbarung die gleichen Bezugszeichen die gleichen Teile bzw. Teile mit vergleichbarer Funktion und wird insofern jeweils auch auf die Schilderung der anderen Figuren verwiesen.

Bei der Leitungsdurchführung 1 gemäß Figur 3a ist ein erstes Abschlussstück 301 in die Manschette 3 eingesetzt. Dieses begrenzt einen Innenraum 310 axial. In entgegengesetzter Richtung wird der Innenraum 310 von einem zweiten Abschlussstück 302 begrenzt. Zur Axialfixierung des ersten Abschlussstücks 301 kann die Manschette 3 mit dem Spannmittel 50 angedrückt werden, zudem ist eine Außenwandfläche 301.1 des ersten Abschlussstücks 301 zu den Erhebungen 31 komplementär konturiert. In anderen Worten ist das erste Abschlussstück 301 damit auch axial formschlüssig in der Manschette 3 gehalten.

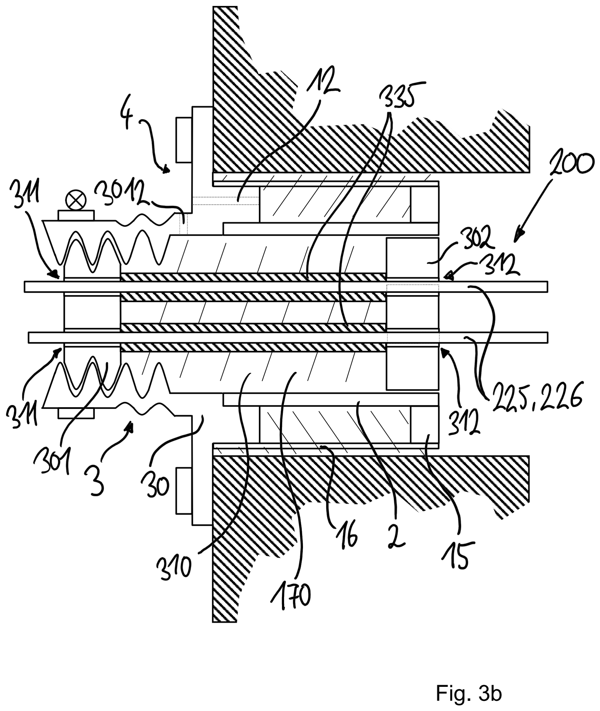

**Figur 3b** zeigt die Leitungsdurchführung 1 in einem fertig montierten Zustand mit hindurchgeführten Leitungen 200, bei denen es sich vorliegend um Einzel-Leitungen 225 handelt, nämlich Fluidleitungen 226. Diese sind jeweils durch entsprechende Durchgangsöffnungen 311, 312 in den Abschlussstücken 301, 302 verlegt. Diese Durchgangsöffnungen 311, 312 können bereits originär geöffnet oder erst vor Ort eingebracht werden, bspw. über in Figur 3a punktiert dargestellte Blinddeckel verschlossen sein.

Im Zuge der Verlegung wird bzw. ist dann zunächst nur eines der Abschlussstücke 301, 302 in Position, bspw. das zweite Abschlussstück 302. Von der Situation gemäß Figur 3a ausgehend würde also das erste Abschlussstück 301 temporär aus der Manschette 3 herausgenommen werden. Die Einzel-Leitungen 225 werden dann zunächst durch das zweite Abschlussstück 302 geführt, welches in der Durchführungshülse 2 angeordnet ist. Optional können, wie in Figur 3b dargestellt, Isolierhülsen 335 auf die Fluidleitungen 226 aufgeschoben werden. Ferner ließen sich auch eines oder mehrere Leerrohre durch die Abschlussstücke 301, 302 verlegen (nicht dargestellt), für eine spätere Leitungsverlegung, bspw. eines Elektrokabels.

Nach einem Hindurchfädeln der Einzel-Leitungen 225 bzw. Fluidleitungen 226 durch das erste Abschlussstück 301 wird dieses in die Manschette 3 eingesetzt und zusätzlich zu dem formschlüssigen Erhalt durch Anziehen des Spannelements 50 befestigt. Zum Einbringen der Füllsubstanz 170 in den Innenraum 310 ist in der Manschette 3 ein Kanal 3112 vorgesehen, durch den sich bspw. ein Schlauch einer Injektionspistole einschieben lässt (nicht dargestellt).

In der in Figur 3b gezeigten Situation ist der gesamte verbleibende Innenraum 310 mit der Füllsubstanz 170 aufgefüllt, diese umschließt die Einzel-Leitungen 225. Die Füllsubstanz 170 dient hierbei sowohl einer mechanischen Befestigung als auch einer thermischen Isolierung. Aufgrund der Isolierhülsen 335 ließen sich die Fluidleitungen 226 im Bedarfsfall jedoch noch immer axial versetzen oder austauschen.

**Figur 4** zeigt das Elastomerteil 30 der Figuren 1a,b und 3a,b in einer Einzeldarstellung, dieses kann bspw. durch Spritzguss oder durch Pressen in eine Form hergestellt werden. Das Elastomerteil 30 bildet die Manschette 3 und die Lage 4a des Flanschteils, wobei auf der Manschette 3 eine hier nicht dargestellte Vertiefung und/oder Erhebungen zum axialen Positionieren des Spannmittels / der Spannschelle ausgebildet sein können. Auf einer der Manschette 3 axial entgegengesetzten Seite der Lage 4a des Flanschteils bildet das Elastomerteil 30 einen Stutzen 35, dessen Innenwandfläche 35.1 im vorliegenden Beispiel auf die Durchführungshülse aufgeklebt wird und auf dessen Außenwandfläche 35.2 die optionale Montagehülse 16 befestigt werden kann, bspw. aufgeklebt werden kann.

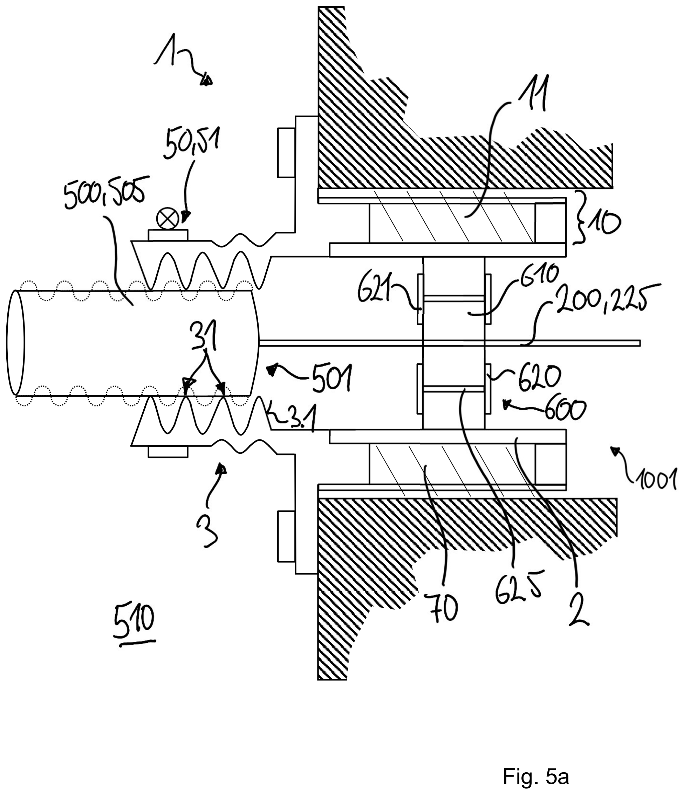

**Figur 5a** zeigt eine Leitungsdurchführung 1 mit einer Durchführungshülse 2, die analog der vorstehenden Schilderung in die Durchlassöffnung 1001 gesetzt und mit der Füllsubstanz 70 darin befestigt ist, siehe im Detail die Schilderung der Figuren 1b, 3a/b. In die Manschette 3 ist in diesem Fall ein Schutzrohr 500 eingesetzt, welches auf einer Gebäudeaußenseite 510 im Erdreich verläuft und die Leitung 200 (vorliegend ist exemplarisch eine Einzel-Leitung 225 dargestellt) schützt bzw. einen Kanal zur Leitungsverlegung schafft, welche damit z. B. nachträglich oder im Zuge einer Revision erfolgen kann. Das Schutzrohr 500 endet in der Leitungsdurchführung 1, sein gebäudezugewandtes Ende 501 ist also in der Leitungsdurchführung 100 angeordnet, im vorliegenden Beispiel in der Manschette 3. Das Schutzrohr 500 kann jedoch auch bis in die Durchlassöffnung 1001 hineinreichen, sodass das gebäudeseitige Ende 501 bspw. in der Durchführungshülse 2 angeordnet ist, was zusätzlich eine Stützfunktion schaffen kann (z. B. mit Blick auf etwaige Setzungen im Erdreich).

Im vorliegenden Beispiel ist das Schutzrohr 500 als Wellrohr 505 vorgesehen, bspw. als Verbundwellrohr. Die an der Innenwandfläche 3.1 ausgebildeten Erhebungen 31 schaffen einen axial formschlüssigen Halt, zusätzlich wird die Manschette 3 mit dem Spannmittel 50 dichtend angedrückt. In die Durchführungshülse 2 ist eine Pressdichtung 600 eingesetzt, welche die Leitung 200 gegen die Leitungsdurchführung 1 und damit auch relativ zum Schutzrohr 500 abdichtet.

Die Pressdichtung 600 weist einen Elastomerkörper 610 auf, wobei an dessen einander axial entgegengesetzten Stirnseiten jeweils ein Presskörper 620, 621 angeordnet ist. Die Presskörper 620, 621 sind über Spannbolzen 625 wirkverbunden, können also durch Anziehen der Spannbolzen 625 axial zueinander verspannt werden. Infolgedessen wird der Elastomerkörper 610 axial gestaucht und radial dichtend angepresst, also nach radial innen zur Leitung 200 und nach radial außen zu Durchführungshülse 2. Die Presskörper 620, 621 können bspw. aus Metall vorgesehen sein, etwa plattenförmig. Alternativ ist bspw. auch ein Hartkunststoff möglich, wobei der Presskörper 620, 621 dann zur Versteifung auch eine hier nicht gezeigte Rippenstruktur haben können. Axial gesehen, also in Aufsicht betrachtet, können die Presskörper 620, 621 ringförmig vorgesehen sein, bspw. umlaufend in sich geschlossen oder auch segmentiert. Im Falle segmentierter Presskörper 620, 621 kann bspw. auch der Elastomerkörper 610 solchermaßen geschlitzt sein, dass er sich aufklappen und auf eine zuvor verlegte Leitung setzen lässt (diese also nicht hindurchgefädelt werden muss).

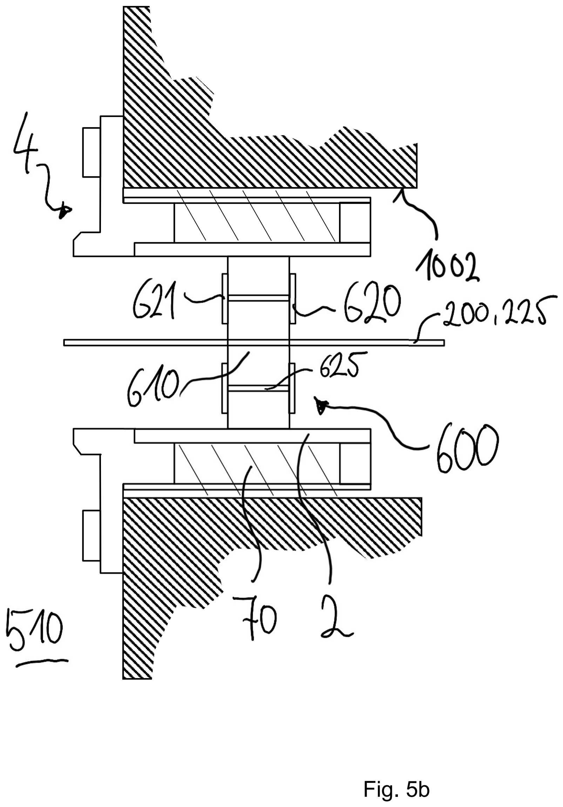

**Figur 5b** zeigt ebenfalls eine mit Vergussmaterial 70 in einer Durchlassöffnung 1001 montierte Durchführungshülse 2, in die eine Pressdichtung 600 eingesetzt ist (vgl. die vorstehende Schilderung bezüglich möglicher Details). Im Unterschied zu der Variante gemäß Figur 5a ist in diesem Fall weder ein Schutzrohr noch eine Manschette vorgesehen, letztere kann bspw. im Zuge der Installation abgetrennt oder auch bereits originär nicht vorgesehen sein. In anderen Worten kann auch ein Elastomerteil 30 vorgesehen werden, welches zwar die Durchführungshülse 2 trägt und im vorliegenden Beispiel ein Flanschteil 4 bildet, jedoch keine Manschette aufweist.

Auch bei dieser Anordnung kann das Flanschteil 4 der Gebäudeaußenseite 510 zugewandt sein und bspw. zu einer Seitenfläche hin dichten (etwa an eine Flächendichtung angebunden sein). Die Leitung 200 wird in diesem Beispiel jedoch direkt im Erdreich verlegt, bspw. als Erdkabel, wobei die Pressdichtung 600 gleichwohl eine zuverlässige Abdichtung schafft. Einerseits hat die Pressdichtung 600 mit der Durchführungshülse 2 eine definierte Anlagefläche, auch unabhängig von einer Beschaffenheit der Laibung 1002 (bspw. auch im Falle von Ausbrüchen oder im Falle von Einschlüssen/Hohlkammern, etwa bei einer Ziegelwand).

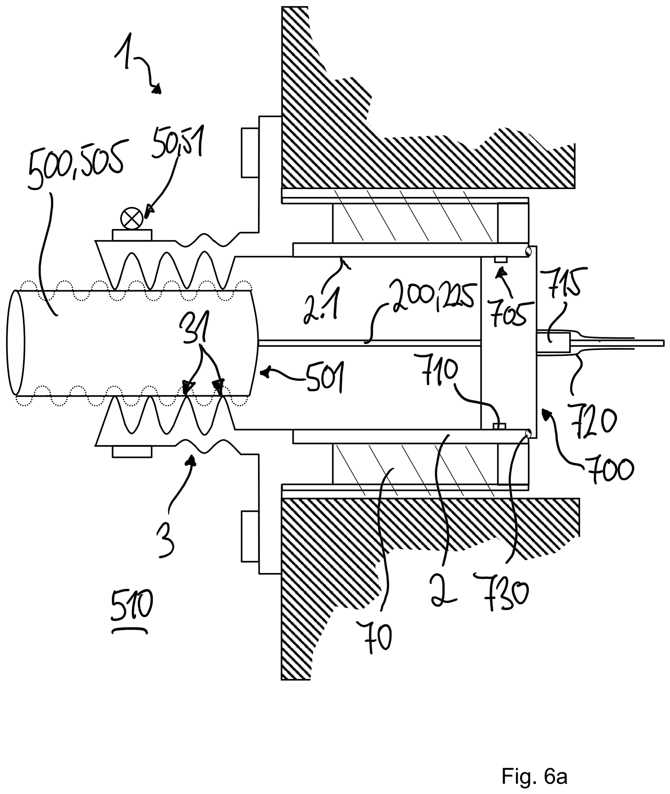

**Figur 6a** zeigt eine Leitungsdurchführung 1, in die analog der Schilderung zu Figur 5a ein Schutzrohr 500 eingeschoben ist. In dem Schutzrohr 500 wurde bzw. ist eine Leitung 200 verlegt, wobei sich deren Relativabdichtung zur Leitungsdurchführung 1 von Figur 5a/b unterscheidet. Anstelle einer Pressdichtung ist in diesem Beispiel ein Systemdeckel 700 in die Durchführungshülse 2 gesetzt. Der Systemdeckel 700 ist über eine Dreharretierung gehalten, im vorliegenden Beispiel über einen Bajonettmechanismus 705. Eine solche Befestigung von Systemdeckeln 700 ist aus dem Bereich von Kabeldurchführungen bekannt, bei denen ein Futterrohr einbetoniert wird und an seine Innenwandfläche Vorsprünge zum Einsetzen und Verschrauben eines Deckels trägt. Vorliegend sind an der Innenwandfläche 2.1 der Durchführungshülse 2 Vorsprünge 710 vorgesehen, die jeweils einen Gewindeabschnitt bilden und den eingeschraubten Deckel halten.

Der Systemdeckel 700 weist einen Rohrstutzen 715 auf, aus diesem tritt die Leitung 200 hervor. Auf dem Rohrstutzen 715 sitzt eine Schrumpfmanschette 720, die aus einem Elastomermaterial vorgesehen ist und sich im aufgeschrumpften Zustand dichtend an die Leitung 200 anlegt. Zur Relativabdichtung zwischen der Durchführungshülse 2 und dem Systemdeckel 700 ist ein Dichtring 730 vorgesehen, der mit dem Arretieren des Systemdeckels 700 dichtend angedrückt wird.

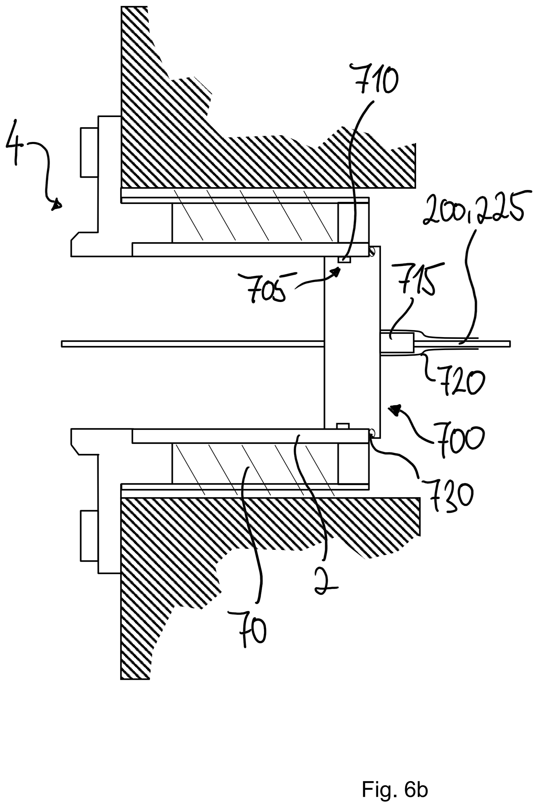

**Figur 6b** zeigt einen hinsichtlich der Relativabdichtung zwischen Leitung 200 und Durchführungshülse 2 identischen Aufbau, wobei im Unterschied zur Figur 6a weder Schutzrohr noch Manschette vorgesehen ist. Wie vorstehend für Figur 5b diskutiert, kann die Leitung 200 bspw. als Erdkabel direkt im Erdreich verlegt sein.

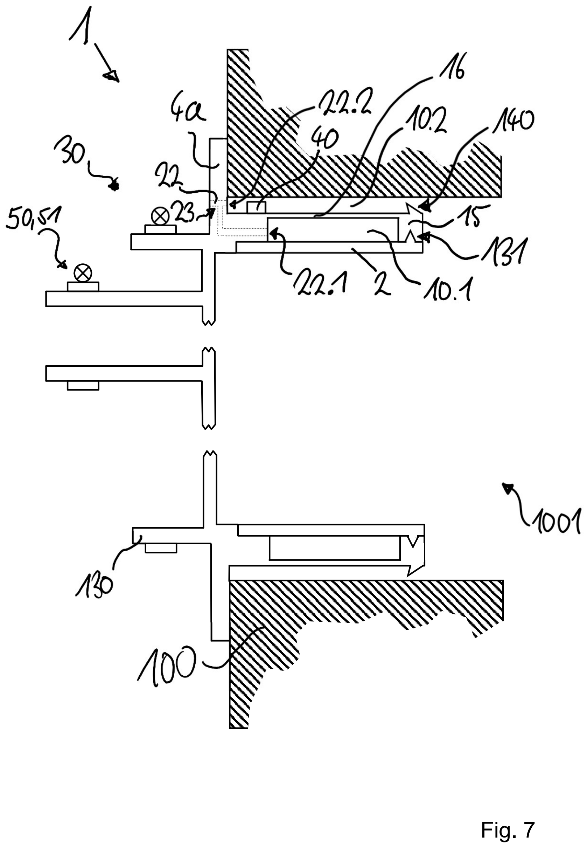

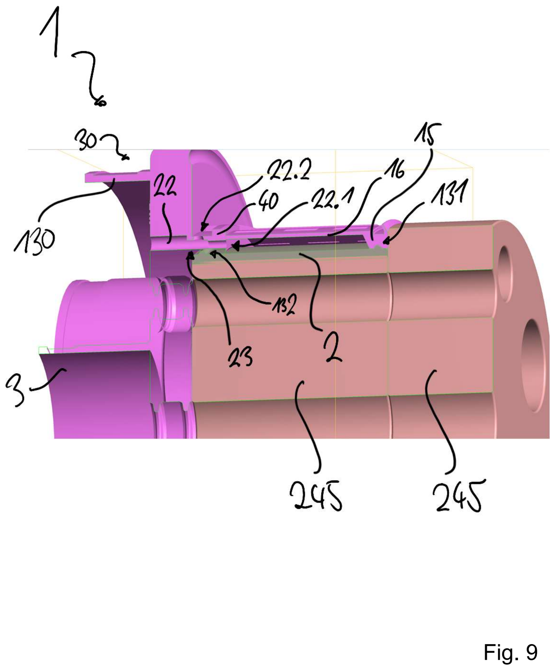

**Figur 7** zeigt eine Leitungsdurchführung 1, bei welcher das Elastomerteil 30 auf die Durchführungshülse 2 aufgezogen ist. Im Detail ist zwischen dem Endstück 15 der Montagehülse 16 und der Durchführungshülse 2 ein axialer Formschluss 131 ausgebildet. Auch am axial entgegengesetzten Ende kann ein Formschluss ausgebildet sein (hier nicht dargestellt), vgl. Figur 9.

In dem Elastomerteil 30 ist ein Injektionskanal 22 vorgesehen, welcher einen Abzweig 23 aufweist. Von dem Abzweig 23 gelangt die Füllsubstanz einerseits über eine erste Mündungsöffnung 22.1 in ein erstes Füllvolumen 10.1 und andererseits über eine zweite Mündungsöffnung 22.2 in ein zweites Füllvolumen 10.2. Die zweite Mündungsöffnung 22.2 ist größer als die erste Mündungsöffnung 22.1, sodass dem zweiten Füllvolumen 10.2 anteilig mehr Füllsubstanz zugeführt wird.

Die Leitungsdurchführung 1 weist ferner einen Steg 40 auf, welcher axial auf die zweite Mündungsöffnung 22.2 folgend angeordnet ist. Der Steg 40 ist vorliegend Teil des Elastomerteils 30, nämlich monolithisch mit der Montagehülse 16 geformt. Der Steg erhebt sich radial nach außen und erstreckt sich dabei über einen Abschnitt in Umlaufrichtung, also in die Zeichenebene hinein und aus dieser heraus. Aus der zweiten Mündungsöffnung 22.2 austretende Füllsubstanz wird von dem Steg 40 jedenfalls anteilig in Umlaufrichtung umgelenkt, was ein Einschäumen über den gesamten Umlauf begünstigt.

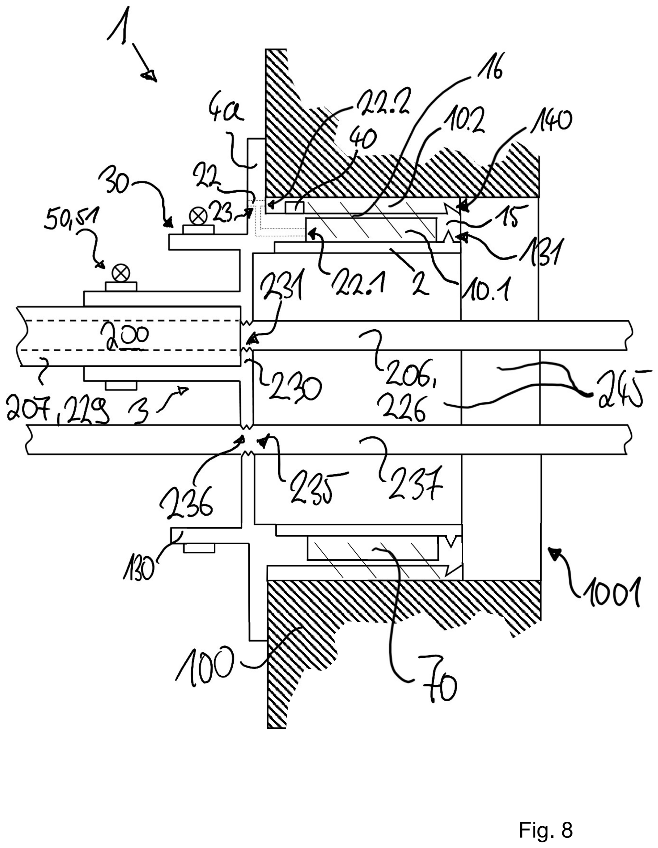

**Figur 8** zeigt die Leitungsdurchführung 1 aus Figur 7 im montierten Zustand, der Ringraum 10 ist also mit der Füllsubstanz 70 aufgefüllt. In der Manschette 3 ist eine Leitung 200 angeordnet, nämlich eine Kombination aus Innen-Leitung 206 und Mantel 207. Bei der Innen-Leitung 206 handelt es sich um eine Fluidleitung 226, bei dem Mantel 207 um eine Isolierung 229. Die Isolierung 229 endet in der Manschette 3, die Innen-Leitung 206 läuft weiter in die Durchlassöffnung. Die Manschette 3 wird mit dem Spannelement 50 gegen den Mantel 207 gedrückt, was einem Eindringen von Feuchtigkeit an der offenen Stirnseite vorbeugen kann.

An dem Elastomerteil 30 ist ein nach innen hervortretender Vorsprung 230 in Form eines Kragens ausgebildet, der sich an die Innen-Leitung 206 anlegt. Wie in der Figur schematisch angedeutet, hat der Vorsprung 230 innenseitig eine Kontur 231.

Diese kann sich an eine entsprechende Außenkontur (hier nicht dargestellt) der Innen-Leitung 206 anlegen, etwa im Falle eines Edelstahl-Wellrohres.

An einem der Lage 4a bzw. dem Flanschteil 4 entgegengesetzten Ende der Montagehülse 16 ist eine sich nach radial außen erhebende Dichtlippe 140 vorgesehen. Diese sitzt im montierten Zustand der Leitungsdurchführung innerhalb der Durchlassöffnung 1001, steht also nicht daraus hervor. Sie schafft eine axiale Begrenzung des zweiten Füllvolumens 10.2, beugt also einem axialen Hervorquellen der Füllsubstanz vor. Die Dichtlippe 140 kann umlaufend in sich geschlossen sein oder, in einer hier nicht dargestellten Variante, eine Unterbrechung für einen definierten Austritt der Füllsubstanz haben, bspw. bezogen auf die Montageposition unten.

Das Elastomerteil 30 bildet eine weitere Durchlassöffnung 235 mit einer Innenkontur 236. Dieser Durchlassöffnung 235 ist keine Manschette zugeordnet, es kann bspw. ein Kabel direkt oder in einem Schutzrohr 237 geführt hindurchverlegt werden.

Die Leitungsdurchführung 1 weist ferner eine weitere Manschette 130 auf, welche die Manschette 3 und die Durchlassöffnung 235 umschließt. In die weitere Manschette 130 kann ein Rohrstück bzw. eine Verblendung (hier nicht dargestellt) eingeschoben werden, welche die Leitungen gebäudeaußenseitig umschließt und bspw. isoliert.

Figur 8 illustriert ferner Füllkörper 245, mit denen ein verbleibender Abschnitt der Durchlassöffnung 1001 und auch das Innere der Durchführungshülse 2 aufgefüllt sind. Die Füllkörper 245 sind hierfür scheibenförmig vorgesehen und liegen der Durchführungshülse 2 bzw. Laibung der Durchlassöffnung 1001 entsprechend in unterschiedlichen Durchmessern vor.

**Figur 9** zeigt eine zu den Figuren 7 und 8 vergleichbare Leitungsdurchführung 1 in einem Schnitt. Die gleichen Bezugszeichen betreffen die gleichen Teile bzw. Teile mit vergleichbarer Funktion, und es wird auf die Beschreibung zu den jeweilig anderen Figuren verwiesen. Figur 9 illustriert nochmals den Injektionskanal 22, welcher über den Abzweig 23 in der ersten Mündungsöffnung 22.1 und der zweiten Mündungsöffnung 22.2 mündet. Der zweiten Mündungsöffnung 22.2 ist der Steg 40 zugeordnet, welcher die dort austretende Füllsubstanz in Umlaufrichtung lenkt.

Die Montagehülse 16 bzw. das gesamte Elastomerteil 30 ist über den axialen Formschluss 131 am Endstück 15, sowie über einen axialen Formschluss 132 am entgegengesetzten Ende auf der Durchführungshülse 2 montiert. Die Füllkörper 245 haben solche Außendurchmesser, dass der kleinere in die Durchführungshülse 2, der größere hingegen in die Durchlassöffnung (hier nicht dargestellt) passt.

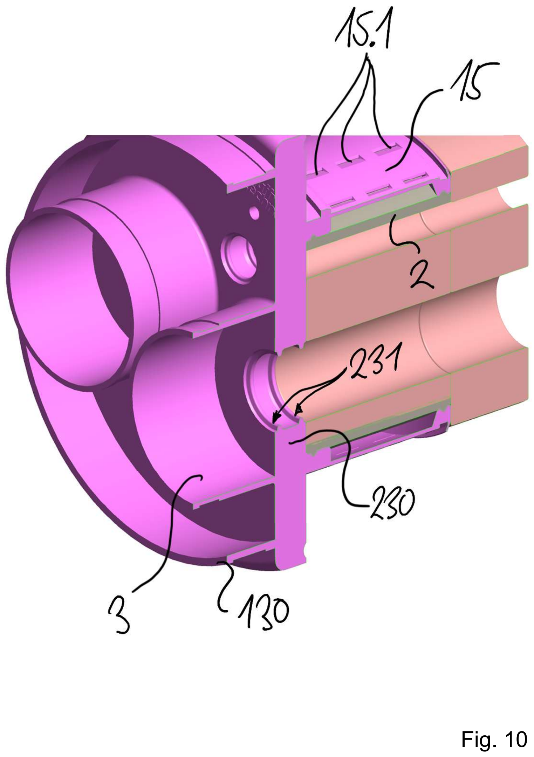

Die geschnittene Schrägansicht gemäß **Figur 10** illustriert, wie die weitere Manschette 130 die Manschetten und Durchlassöffnungen für die Einzel-Leitungen umschließt. Ferner ist der der Manschette 3 zugeordnete Vorsprung 230 zu erkennen, der innenseitig die Kontur 231 zur axial formschlüssigen Aufnahme eines Wellrohres bildet (z. B. eines Edelstahl-Wellrohres). In der Schrägansicht ist ferner zu erkennen, dass in der Montagehülse 15 Durchlassöffnungen 15.1 vorgesehen sind, welche die inner- und außerhalb davon angeordneten Füllvolumina miteinander verbinden. Diese Durchlassöffnungen 15.1 können sich unter dem Druck der Füllsubstanz weiten, also mit zunehmender Befüllung/Expansion ein verstärktes Austreten der Füllsubstanz begünstigen.

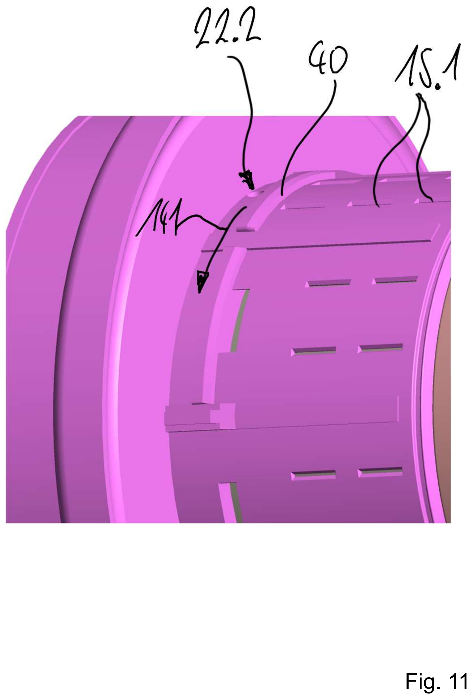

**Figur 11** zeigt nochmals die zweite Mündungsöffnung 22.2 und den Steg 40, der die Füllsubstanz in Umlaufrichtung 141 lenkt. Die über diesen Abschnitt des Injektionskanals gelenkte Füllsubstanz kann ein umlaufendes Hinterschäumen und damit Abdichten des Flansches sicherstellen helfen. Der andere, innerhalb des Elastomermantels geführte Teil der Füllsubstanz füllt diesen aus und tritt dann über die Durchlassöffnungen 15.1 ebenfalls nach außen aus.

**Figur 12** zeigt eine geschnittene Seitenansicht einer Leitungsdurchführung 101, die einen Stützkörper 102, ein Flanschelement 109 und ein Dichtelement 110 umfasst. Durch die Leitungsdurchführung 101 sind im gezeigten Beispiel zwei Leitungen 104 verlegt, vorliegend zwei Kältemittelleitungen zur Verbindung einer Außeneinheit einer Wärmepumpe (in der Figur links der Leitungsdurchführung 101 gelegen) mit einem gebäudeinnenseitig liegenden Heizungsraum (in der Figur rechts der Leitungsdurchführung 101 gelegen). Hierfür ist die Leitungsdurchführung 101 in eine Durchlassöffnung 105 eines Wand- bzw. Bodenelements (im gezeigten Beispiel handelt es sich um ein Wandelement 106 eines Gebäudes) eingesetzt.

Die Leitungsdurchführung 101 ist dabei solchermaßen in die Durchlassöffnung 105 eingesetzt, dass zwischen dem Stützkörper 102 und einer Laibung 105.1 der Durchlassöffnung 105 eine äußere Kammer 108 gebildet wird. In diese äußere Kammer 108 wird über ein erstes Injektionselement 111 eine zunächst fließfähige Füllsubstanz eingebracht, die dann expandiert und in der Durchlassöffnung 105 härtet. Der Stützkörper 102 bildet zusammen mit dem Flanschelement 109 und dem Dichtelement 110 zudem eine innere Kammer 103, durch welche die Leitungen 104 entlang einer Mittenachse X des Stützkörpers 102 hindurchgeführt werden.

Die Leitungen 104 sind an axialen Enden der Leitungsdurchführung 101 dichtend umschlossen, nämlich werden diese in dem gezeigten Beispiel wandaußenseitig durch zwei Dichtmanschetten 109.2 geführt und mit je einem Klemmelement 109.3 geklemmt. In der Durchlassöffnung 105 selbst findet ebenso eine Dichtung an der Mantelfläche der Leitungen 104 statt, hierfür weist das Dichtelement 110 zwei die Leitungsmantelfläche der Leitungen 104 umschließende Dichtmanschetten 110.2 auf. Im gezeigten Beispiel sind die Dichtmanschetten 110.2 kegelförmig, es nimmt deren Innendurchmesser mit zunehmendem Abstand (entlang der Mittenachse X gemessen) von dem Stützelement 102 ab. Zusätzlich oder anstatt der dichtenden Anlage an der Außenmantelfläche der Leitungen 104 kann in die innere Kammer 103 der Leitungsdurchführung 102 über ein zweites Injektionselement 112 eine zunächst fließfähige Füllsubstanz eingebracht werden, die dann expandiert und in der zweiten Kammer 103 härtet.

Im gezeigten Beispiel ist ein Stützkörpermaterial des Stützkörpers 102 ein geschäumtes Kunststoffmaterial, nämlich Polypropylen. Demgegenüber sind das Flanschelement 109 und das Dichtelement 110 aus einem Elastomermaterial vorgesehen, weisen dementsprechend eine gewisse Eigenelastizität auf.

In Figur 12 ist zu erkennen, dass an einer Außenmantelfläche des Stützkörpers 102, also an dessen radial nach außen weisender Zylindermantelaußenfläche, mehrere Formschlussabschnitte 102.1, 102.2 gebildet sind. Nämlich ist an einem ersten axialen Endabschnitt (links in Figur 1 dargestellt) ein erster Formschlussabschnitt 102.1 zu erkennen und an einem dem ersten axialen Endabschnitt entgegengesetzten zweiten axialen Endabschnitt (in Figur 1 rechts zu erkennen) ein zweiter Formschlussabschnitt 102.2 ausgebildet. Ein Formschlussabschnitt 109.1 des Flanschelements 109 ist hierbei derart komplementär zu dem ersten Formschlussabschnitt 102.1 des Stützkörpers 102 ausgestaltet, dass das Flanschelement 109 in axialer Richtung (also in Richtung der Mittenachse X) gegen ein Verschieben entlang der Mittenachse X gesichert ist.

Ebenso ist an dem Dichtelement 110 ein radial nach innen gerichteter Formschlussabschnitt 110.1 ausgebildet, welcher komplementär zu dem zweiten Formschlussabschnitt 102.1 des Stützkörpers 102 ist. In der Schnittdarstellung in Figur 1 ist zudem zu erkennen, dass sich an den Formschlussabschnitt 109.1 des Flanschelements 109 und den Formschlussabschnitt 110.1 des Dichtelements 110 jeweils noch ein Befestigungsabschnitt mit radial nach außen gerichteten Stegen anschließt, die zur Verbindung mit der aushärtenden bzw. expandierenden Füllsubstanz vorgesehen sind.

Im gezeigten Beispiel sind die innere Kammer 103 und die äußere Kammer 108 fluidisch voneinander getrennt; die innere Kammer 103 weist hierbei ein Füllvolumen von etwa 350 cm³ und die äußere Kammer ein Füllvolumen von etwa 640 cm³ auf. Zudem ist in Figur 1 die monolithische Ausgestaltung des Stützelements 102 zu erkennen, dieses ist vollständig und ohne innere Materialgrenze aus dem geschäumten Kunststoffmaterial hergestellt.

Im gezeigten Beispiel wurde die Leitungsdurchführung 101 vor dem Einbau in die Durchlassöffnung 105 montiert, nämlich wurde das Flanschelement 109 unter Ausnutzung seiner materialbedingten Eigenelastizität im Bereich seines Formschlussabschnitts 109.1 elastisch aufgeweitet und auf den ersten Formschlussabschnitt 102.1 des Stützkörpers 102 aufgezogen. Ebenso wurde mit dem Dichtelement 110 verfahren, sodass beide vor der Montage der Leitungsdurchführung 101 auf dem Stützkörper 102 aufgezogen und die hierdurch gebildete Leitungsdurchführung 101 als vollständig zusammengesetzte Komponente einfach in der Durchlassöffnung 105 montierbar ist.

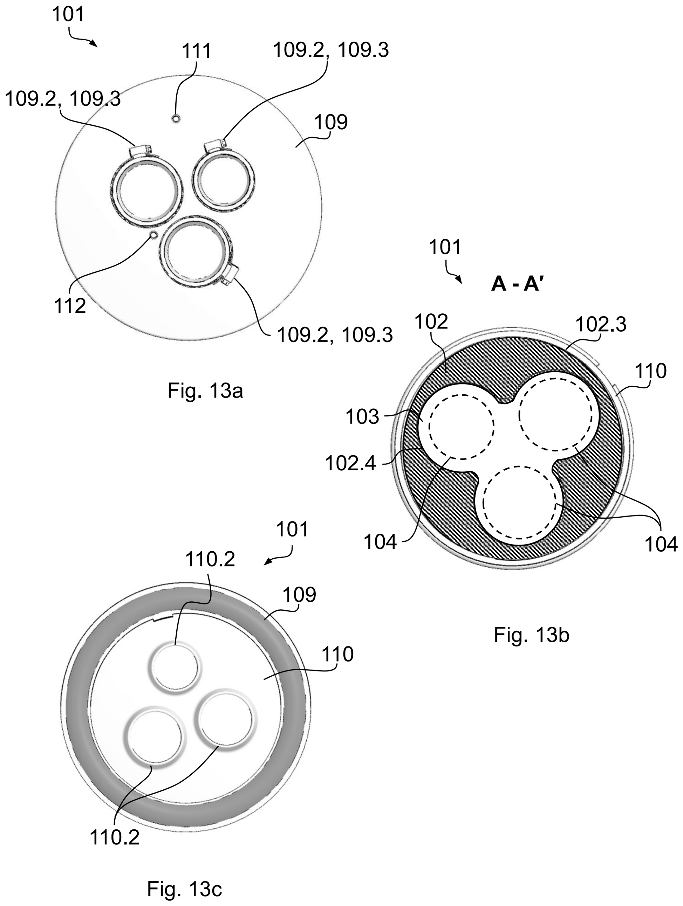

**Figur 13a** zeigt eine Draufsicht auf das Flanschelement 109, nämlich in Bezug auf Figur 1 von links gesehen. Zu erkennen ist die kreisrunde Ausgestaltung des Flanschelements 109 mit drei Dichtmanschetten 109.2 und jeweils einem daran angeordneten Klemmelement 109.3, nämlich jeweils einem Spannband. In Figur 2a sind zudem die Injektionselemente 111, 112 zur separaten Einführung der fließfähigen Füllsubstanz in die äußere Kammer 108 (mittels des ersten Injektionselements 111) und die innere Kammer 103 (mittels des zweiten Injektionselement 112) zu erkennen.

In **Figur 13b** ist ein Schnitt durch den Stützkörper 102 dargestellt, nämlich entlang der Schnittlinie A - A' aus Figur 1. Hier ist die besondere Ausgestaltung der Wandstärken des Stützkörpers 102 zu erkennen, und zwar ist in dem Schnitt orthogonal zur Mittenachse X des Stützkörpers 102 betrachtet, eine Stützkörperaußenkante 102.3 kreisförmig, eine Stützkörperinnenkante 102.4 jedoch aus einer Mehrzahl von Bogensegmenten mit zumindest abschnittsweise konstantem Radius gebildet. Im gezeigten Beispiel sind nämlich drei Bohrungen bzw. Aussparungen derart in dem Stützkörper 102 vorgesehen, dass sich eine (in der Schnittdarstellung betrachtet) kleeblattförmige innere Kammer 103 ergibt. Ein mit der Füllsubstanz auszufüllender Innenraum (nach dem Hindurchführen der Leitungen 104) ist also vglw. klein.

**Figur 13c** zeigt eine Draufsicht auf das Dichtelement 110, nämlich bezogen auf Figur 1 von rechts gesehen (ohne Wand-/Bodenelement). Hier sind einerseits das entlang der Mittenachse X weiter links gelegene (in Bezug auf Figur 1) Flanschelement 109 und andererseits das weiter rechts gelegene Dichtelement 110 zu erkennen, welches das Flanschelement 109 teilweise und den dazwischenliegenden Stützkörper 102 vollständig verdeckt. An dem Dichtelement 110 sind insgesamt drei Dichtmanschetten 110.2 ausgebildet, diese umschließen die Leitungsmantelfläche der hindurch verlegten Leitungen 104 (nicht dargestellt) bevorzugt vollständig und dichten diese gegenüber einer Außenumgebung ab.

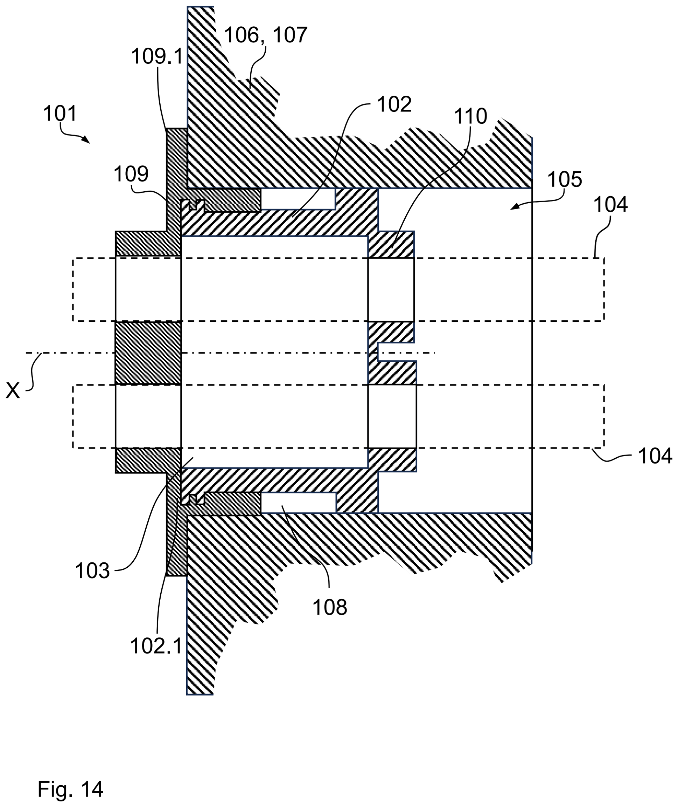

**Figur 14** zeigt ein weiteres exemplarisches Ausführungsbeispiel der Leitungsdurchführung 101, hier sind der Stützkörper 102 und das Dichtelement 110 integral miteinander gebildet. Das Flanschelement 109 ist demgegenüber als separates Bauteil ausgebildet (z. B. wie vorstehend im Detail gezeigt), dieses wird über den Stützkörper 102 gestülpt (wie zuvor beschrieben).

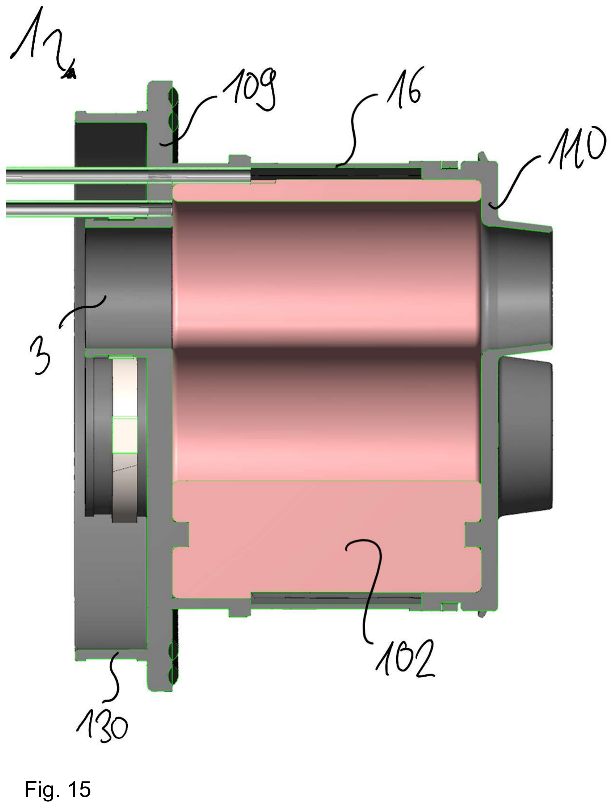

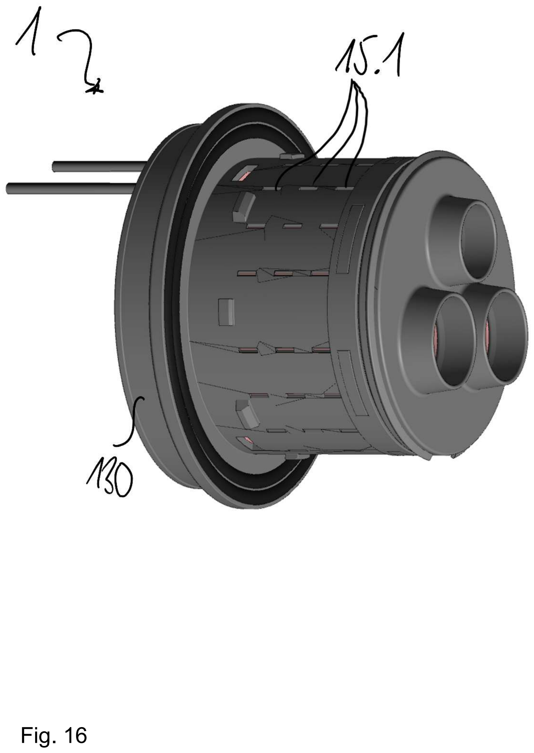

**Figur 15** zeigt eine weitere Ausführungsform. In diesem Fall sind gesonderte Injektionskanäle und -schläuche zum Befüllen von inneren und äußeren Volumina mit der Füllsubstanz dargestellt. Es könnte jedoch ebenso ein Injektionskanal mit Abzweig integriert sein, siehe vorstehend im Detail. Analog den Figuren 13 bis 15 ist bei dieser Variante ein Stützkörper 102 aus geschäumtem Kunststoffmaterial vorgesehen. Im Unterschied zu den Figuren 13 und 15 ist hierbei radial außerhalb davon eine Montagehülse 16 angeordnet, die vorliegend aus einem Elastomermaterial vorgesehen ist. Diese hält die noch flüssige Füllsubstanz anfangs zusammen, mit zunehmender Expansion kann die Füllsubstanz über Durchlassöffnungen 15.1 austreten, vgl. **Figur 16****.** Die Montagehülse 16 ist vorliegend mehrstückig zu dem Dichtelement 110, ist nämlich auf dieses aufgezogen. Mit dem Flanschelement 109 ist sie hingegen monolithisch ausgebildet.

Auch bei dieser Variante gibt es wiederum eine weitere Manschette 130, über welche bspw. ein Schutzrohr oder eine Verblendung angeschlossen werden kann.

## Patentansprüche

1. Verwendung einer Leitungsdurchführung (1),
welche eine Durchführungshülse (2), durch die eine Leitung (200) entlang einer Mittenachse (20) der Durchführungshülse (2) hindurchführbar ist, und
eine Manschette (3) aufweist, welche axial an die Durchführungshülse (2) anschließt,
wobei die Manschette (3) aus einem Elastomermaterial vorgesehen ist, zum Einbau in eine Durchlassöffnung (1001) in einem Wand- oder Bodenelement (100) eines Gebäudes, wobei
- die Leitungsdurchführung (1) solchermaßen in die Durchlassöffnung (1001) eingesetzt wird, dass die Manschette (3) in einer Montageposition der Leitungsdurchführung (1) axial außerhalb der Durchlassöffnung (1001) angeordnet ist, und
- die Durchführungshülse (2) in dieser Montageposition befestigt wird, indem in einen Ringraum (10) zwischen Durchführungshülse (2) und Laibung (1002) der Durchlassöffnung (1001) eine zunächst fließfähige Füllsubstanz (70) eingebracht wird, die dann expandiert und in der Durchlassöffnung (1001) härtet, und
- sich die Manschette (3) nach radial innen zu einer durch die Durchführungshülse (2) gelegten Leitung (200) hin anlegt.

2. Verwendung nach Anspruch 1, bei welcher zumindest eine Innenwandfläche (3.1) der Manschette (3) in einem Längsschnitt betrachtet mit mehreren nach radial innen hervortretenden Erhebungen (31) geformt ist, die axial aufeinander folgend angeordnet sind.

3. Verwendung nach Anspruch 1 oder 2, bei welcher eine Außenwandfläche (210) der Leitung (200) in einem Längsschnitt betrachtet mit axial aufeinanderfolgenden Erhebungen (201) und Vertiefungen (202) geformt ist.

4. Verwendung nach einem der vorstehenden Ansprüche, bei welcher die Durchführungshülse (2) aus einem im Vergleich zu dem Elastomermaterial härteren Durchführungshülsenmaterial vorgesehen ist.

5. Verwendung nach einem der vorstehenden Ansprüche, bei welcher die Leitung (200) einen Außendurchmesser von mindestens 8 cm hat und/oder ein Monoblockrohr (205) ist.

6. Verwendung nach einem der vorstehenden Ansprüche, wobei die Leitung (200) eine Innen-Leitung (206) und einen Mantel (207) aufweist, wobei die Innen-Leitung (206) mit dem Mantel (207) in die Manschette (3) hineinläuft und die Innen-Leitung (206) ohne den Mantel (207) in die Durchführungshülse (2) weiterläuft.

7. Verwendung nach Anspruch 6, wobei an einer der Durchführungshülse zugewandten Seite der Manschette (3) ein nach innen hervortretender Vorsprung (230) vorgesehen ist, der sich zu der Innen-Leitung (206) hin anlegt.

8. Verwendung nach einem der vorstehenden Ansprüche, bei welcher die Manschette (3) mit einem aufgesetzten Spannelement (50) nach radial innen gegen die Leitung (200) gedrückt wird.

9. Verwendung nach einem der vorstehenden Ansprüche, bei welcher die Leitungsdurchführung (1) eine weitere Manschette (130) aufweist, welche einen größeren Durchmesser hat und die Manschette (3) umschließt.

10. Verwendung nach einem der vorstehenden Ansprüche, bei welcher die Füllsubstanz (70) durch einen Injektionskanal (22) eingebracht wird, welcher einen Abzweig (23) aufweist.

11. Verwendung nach Anspruch 10, bei welcher eine erste Mündungsöffnung (22.1) des Injektionskanals (22) in ein erstes Füllvolumen (10.1) mündet und eine zweite Mündungsöffnung (22.2) des Injektionskanals (22) in ein zweites Füllvolumen (10.2) mündet, welches radial außerhalb des ersten Füllvolumens (10.1) angeordnet ist, wobei die erste und die zweite Mündungsöffnung (22.1, 22.2) bevorzugt unterschiedlich groß sind.

12. Verwendung nach einem der vorstehenden Ansprüche, bei welcher die Leitungsdurchführung (1) eine Montagehülse (16) aufweist, die radial außerhalb der Durchführungshülse (2) angeordnet ist, wobei die Füllsubstanz (70) in ein Füllvolumen radial zwischen der Montagehülse (16) und der Durchführungshülse (2) eingebracht wird, und wobei die Montagehülse (16) bevorzugt aus einem Elastomermaterial vorgesehen ist und auf die Durchführungshülse (2) aufgezogen ist.

13. Verwendung nach einem der vorstehenden Ansprüche, bei welcher in einem Füllvolumen (10.2) der Leitungsdurchführung (1) ein Steg (40) vorgesehen ist, welcher eine zumindest anteilige Erstreckung in Umlaufrichtung hat und eine Füllsubstanz zumindest anteilig in Umlaufrichtung lenkt.

14. Verwendung nach den Ansprüchen 12 und 13, bei welcher der Steg (40) an der Montagehülse (16) vorgesehen ist.

15. Leitungsdurchführungsanordnung, insbesondere als Ergebnis einer Verwendung nach einem der vorstehenden Ansprüche, mit
einer Leitungsdurchführung (1),
welche eine Durchführungshülse (2), durch die eine Leitung (200) entlang einer Mittenachse (20) der Durchführungshülse (2) hindurchführbar ist, und
eine Manschette (3) aufweist, welche axial an die Durchführungshülse (2) anschließt,
wobei die Manschette (3) aus einem Elastomermaterial vorgesehen ist, und
einem Wand- oder Bodenelement eines Gebäudes,
wobei die Leitungsdurchführung (1) in eine Durchlassöffnung (1001) in dem Wand- oder Bodenelement (100) eingebaut ist, wobei
- die Leitungsdurchführung (1) solchermaßen in die Durchlassöffnung (1001) eingesetzt ist, dass die Manschette (3) axial außerhalb der Durchlassöffnung (1001) angeordnet ist, und
- die Durchführungshülse (2) befestigt ist, indem in einen Ringraum (10) zwischen Durchführungshülse (2) und Laibung (1002) der Durchlassöffnung (1001) eine Füllsubstanz (70) eingebracht ist,
- sich die Manschette (3) nach radial innen zu einer durch die Durchführungshülse (2) gelegten Leitung (200) hin anlegt.
